# EUROPEAN PATENT SPECIFICATION

(11) **EP 3 373 528 B1**
(45) Date of publication and mention of the grant of the patent: **27.11.2019**
(21) Application number: 16904244.7
(22) Date of filing: 28.12.2016
(51) Int. Cl.: H04L 12/24, H04L 12/28, H04L 12/46, H04W 48/18, H04W 84/12, H04W 88/06

(54) **DEVICE CONTROL SYSTEM**
VORRICHTUNGSSTEUERUNGSSYSTEM
SYSTÈME DE COMMANDE DE DISPOSITIF

(43) Date of publication of application: 12.09.2018
(73) Proprietor: Mitsubishi Electric Corporation, Chiyoda-ku Tokyo 100-8310 (JP)
(72) Inventor: HIRANO, Makoto, Tokyo 100-8310 (JP); KANADA, Hiromitsu, Tokyo 100-8310 (JP); HASHIMOTO, Kentaro, Tokyo 100-8310 (JP); TANAKA, Toshiaki, Tokyo 100-8310 (JP)
(74) Representative: Pfenning, Meinig & Partner mbB
(86) International application number: PCT/JP2016/089179
(87) International publication number: WO 2018/123048

(56) References cited:
- JP-A- 2008 032 655
- JP-A- 2010 136 308
- JP-A- 2015 082 783
- JP-A- 2016 015 682
- US-A1- 2010 111 055
- US-A1- 2013 067 041
- 'Bluetooth de Tsukue Mawari no Cable Isso! Musen LAN de Cable o Isso shiyo!' NIKKEI PC BEGINNERS vol. 12, no. 14, 13 July 2007, pages 18 - 27, XP009507483
- KOICHI IMAFUJI: 'Wi-Fi Router Saishin no Setteijutsu Settei ya Setsuzoku no Point o Osaeyo' NIKKEI PERSONAL COMPUTING vol. 722, 25 May 2015, pages 42 - 44, XP009507515

## Description

### Field

The present invention relates to a device control system.

### Background

A device control system that operates a controlled device installed indoors via a network requires a controlled device that is newly purchased by a user to be connected to the network. Patent Literature 1 discloses a method of establishing a wireless connection between a controlled device and an operation terminal when the controlled device is a wireless product.

In the wireless connection method disclosed in Patent Literature 1, the operation terminal communicates directly with the controlled device without going through a terminal typified by a wireless local area network (LAN) router, when an installer of the controlled device operates the operation terminal and activates wireless configuration software of the operation terminal. When receiving a configuration file from the operation terminal, the controlled device automatically configures itself with wireless configuration information described in the configuration file to change a setting of a service set identifier (SSID) from the factory setting to an SSID of the wireless LAN router, change a setting of a wireless channel to a wireless channel used by the wireless LAN router, and further set an encryption key. This allows the controlled device to be connected to the wireless LAN router. The SSID is an identifier of an access point defined by a wireless LAN communication method in the IEEE 802. 11 series.

### Citation List

### Patent Literature

Patent Literature 1: Japanese Patent Application Laid-Open No. 2008-4975

### Summary

### Technical Problem

The wireless connection method disclosed in Patent Literature 1 allows the controlled device to be connected to the wireless LAN router by automatically designating the factory default SSID set to the controlled device. Although, the operation terminal needs to have wireless configuration software installed thereto so that a test of the controlled device is required in order to see whether or not the software is compatible with the model and the version of the operating system (OS) of the operation terminal.

The present invention has been made in view of the aforementioned problem, in which an object of the present invention is to provide a device control system capable of connecting a controlled device to a wireless LAN router in a secure state without installing a dedicated application for connection configuration to an operation terminal.

JP 2015 082783 A provides an apparatus control system and a household electrical appliance that are able to achieve secure communication with a server by acquiring time information before starting SSL communication.

US 2010/111055 A1 provides a wireless access point, a wireless network architecture, and a method for establishing the wireless network architecture, wherein a first wireless access point and a second wireless access point are defined.

US 2013/067041 A1 proposes for configuring multiple client devices to connect to a network device (e.g., a wireless router). In one embodiment, a setup application executing on one of the client devices determines if the network device has previously been configured.

### Solution to Problem

In order to solve the aforementioned problem and achieve the objective, the present invention provides a device control system as defined in the appended independent claim 1.

### Advantageous Effects of Invention

The device control system according to the present invention has an effect that the controlled device can be connected to the wireless LAN router in a secure state without installing a dedicated application for connection configuration to the operation terminal.

### Brief Description of Drawings

FIG. 1 is a diagram schematically illustrating a device control system according to an embodiment.
FIG. 2 is a diagram illustrating an internal configuration of each of a controlled device and an external connector.
FIG. 3 is a diagram illustrating an example of an operation screen displayed on an operation terminal.
FIG. 4 is a first diagram describing a communication mode applied to the device control system.
FIG. 5 is a second diagram describing the communication mode applied to the device control system.
FIG. 6 is a diagram describing an operation when the operation terminal is located in an environment in which wireless LAN communication can be performed.
FIG. 7 is a diagram describing an operation when the operation terminal is located in an environment in which wireless LAN communication cannot be performed.
FIG. 8 is a sequence diagram illustrating an operation of the device control system.
FIG. 9 is a flowchart of an operating right management operation performed by an operating right management unit illustrated in FIG. 1.
FIG. 10 is a sequence diagram for registering information of the external connector connected to a router in the operation terminal in the device control system according to the embodiment.
FIG. 11 is a first diagram describing a problem in the device control system according to a comparison example.
FIG. 12 is a second diagram describing a problem in the device control system according to a comparison example.
FIG. 13 is a diagram illustrating an open systems interconnection (OSI) reference model.
FIG. 14 is a diagram describing the flow of acquiring a media access control (MAC) address by using an address resolution protocol (ARP).
FIG. 15 is a diagram describing a communication mode featured in the present embodiment.
FIG. 16 is a table illustrating a method of switching a connection mode of each of the external connector and the operation terminal to a router connection mode or a terminal connection mode, and a connection state of each of the external connector and the operation terminal.
FIG. 17 is a diagram illustrating a product image of the external connector.
FIG. 18 is a diagram describing an operation when the connection mode is switched with a mode selector switch of FIG. 17.
FIG. 19 is a flowchart of an operation in which the operation terminal rewrites configuration information of a wireless communication unit of the external connector.
FIG. 20 is a diagram describing an example of a method of selecting the external connector.
FIG. 21 is a diagram illustrating an example of a two-dimensional code assigned to the external connector.
FIG. 22 is a diagram illustrating a state in which an address of a web display unit is input to a display screen of the operation terminal.
FIG. 23 is a diagram illustrating an example of a network configuration screen as a first screen displayed on the operation terminal.
FIG. 24 is a diagram illustrating an example of an SSID list displayed on the web display unit.

### Description of Embodiments

A device control system according to an embodiment of the present invention will be described in detail with reference to the drawings. Note that the present invention is not limited to the embodiment.

### Embodiment

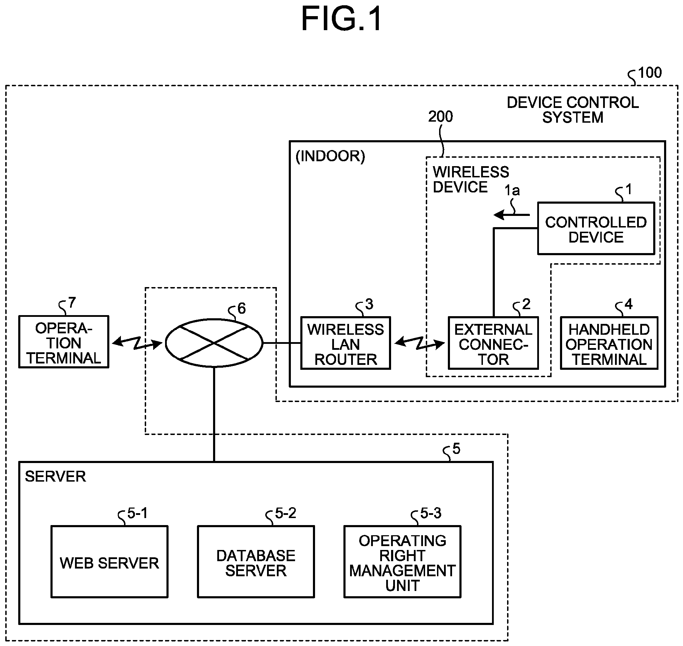

FIG. 1 is a diagram schematically illustrating a device control system according to an embodiment. A device control system 100 includes a wireless device 200, a wireless LAN router 3, a handheld operation terminal 4, a server 5, and an operation terminal 7.

The wireless device 200 includes a controlled device 1 and an external connector 2. The server 5 is connected to the wireless LAN router 3 and the operation terminal 7 via a network 6, and the external connector 2 is connected to the wireless LAN router 3. The controlled device 1 is connected to the external connector 2. In the following description, the controlled device 1 can simply be referred to as "device 1", the external connector 2 as "connector 2", the wireless LAN router 3 as "router 3", and the operation terminal 7 as "terminal 7" unless otherwise mentioned.

The device 1 is a household electrical appliance such as an air conditioner, a refrigerator, or a television. Information output from the device 1 includes, for example, type information, operating state information, or identification information. The type information is information specifying the type of the device 1. The operating state information is information indicating the operating state and the operating mode of the device 1. The identification information is information such as a model name and a production number specifying the device 1. In the following description, these pieces of information are referred to as "controlled device information 1a" unless stated otherwise. Note that although the connector 2 is connected to the device 1 in the device control system 100 according to the present embodiment, the device control system 100 can also be configured such that a remote communication unit 24, which will be described later, has the functionality of the connector 2. Moreover, the type of the device 1 is not limited to being an air conditioner, refrigerator, or television and can be any household electrical appliance that can be remotely controlled. Furthermore, not only one but a plurality of the devices 1 can be connected to the connector 2.

The terminal 7 is a terminal capable of controlling the device 1, and it can be a dedicated control terminal for controlling the device 1, or it can be a device used as a control terminal by implementing application software that executes the functionality of controlling the device 1 on a mobile phone, a tablet terminal, or a smartphone.

The terminal 7 is configured such that it is possible to select one of two kinds of communication modes. One of the communication modes is an indoor mode, in which the terminal is located in a wireless LAN environment within the range of the radio waves from the router 3 connected to the connector 2. The other communication mode is an outdoor mode, in which the terminal is located in an environment not within the range of the radio waves from the router 3 connected to the connector 2.

When switching the mode, the indoor mode is automatically selected when the terminal 7 is located within the range of the radio waves from the router 3, which is connected to the connector 2 and registered in advance in the terminal 7, and the outdoor mode is automatically selected when the terminal 7 is not located within the range of the radio waves from the router 3, which is connected to the connector 2 and registered in advance in the terminal 7. The terminal is, for example, within the range of the radio waves from the router 3 when located indoors.

The terminal 7 set to the indoor mode accesses the router 3 by Wi-Fi (registered trademark) communication implemented by a wireless LAN communication function, and it can control the device 1 via the router 3 and the connector 2. The terminal 7 performs what is referred to as "indoor operation" when the wireless LAN communication function is implemented to control the device 1 or to monitor and operate the device.

The terminal 7 set to the outdoor mode implements an Internet communication function to access a communication network and an Internet public wireless communication network conforming to communication standards such as 3G, 4G, and LTE, and it can control the device 1 via the server 5, the router 3, and the connector 2. The communication network and the Internet public wireless communication network will be hereinafter referred to as the "network 6". The terminal 7 performs what is referred to as "outdoor operation" when the Internet communication function is implemented to control the device 1.

The router 3 generally has a functionality of determining the internet protocol (IP) address of a device connected to the router 3 by a dynamic host configuration protocol (DHCP), and thus a unique IP address is assigned to each of the connector 2 and the terminal 7, which are devices connected to the router 3. Although not illustrated, an optical line modem or an asymmetric digital subscriber line (ADSL) modem for connecting the router 3 to the network 6 is installed between the router 3 and the network 6.

The handheld operation terminal 4 can, for example, be an infrared remote control with which the device 1 is equipped. The handheld operation terminal 4 uses near infrared radiation at 38 kHz as a carrier wave, and it is suitable for use in the same room as the device 1 due to the propagation characteristics of near infrared radiation. The device control system 100 gives higher priority to an operation from the handheld operation terminal 4 located indoors than to an operation from the terminal 7 located outside the home. Furthermore, the operation from the handheld operation terminal 4 can be effected preferentially even when the operating right is given to the terminal 7. The handheld operation terminal 4 can thus perform setting of the device 1 even when the terminal 7 or the network 6 fails. Furthermore, the terminal 7 can perform telecommunication by using the network 6 even when unable to perform wireless LAN communication with the router 3. Consequently, the terminal 7 has an advantage of being able to perform communication regardless of the presence or absence of an obstacle between the device 1 and the handheld operation terminal 4.

The server 5 includes a web server 5-1 to which the terminal 7 is connected; a database server 5-2 storing data processed by the web server 5-1; and an operating right management unit 5-3.

A unique area in the database server 5-2 is assigned to each device 1, and the terminal 7 can access only the unique area of the device 1 registered in advance.

The operating right management unit 5-3 gives an operating right to the terminal 7 that has launched an application related to an operation, and it permits only a remote operation by the terminal 7 to which the operating right is given. The terminal 7 having the operating right accesses the server 5 and acquires the controlled device information 1a located in a unique area within the database server 5-2. The terminal 7 having the operating right also accesses the server 5 and changes the setting in the unique area within the database server 5-2 when changing the setting of the device 1. Details of the operating right management operation performed by the operating right management unit 5-3 will be described later.

Communication between the connector 2 and the router 3 can be wireless communication or wired communication. Examples of wireless communication include standardized Bluetooth (registered trademark), specified low power communication in a 900-MHz band, and wireless LAN communication based on IEEE 802. 11 such as Wi-Fi (registered trademark). The wireless communication between the connector 2 and the router 3 is however not limited to these communication methods and another communication method can be used. Examples of wired communication include Ethernet (registered trademark) standardized under IEEE 802. 3 and RS 485 communication. The wired communication between the connector 2 and the router 3 is however not limited to these communication methods and another communication method can be used.

The connector 2 has a functionality of interconverting the communication method of the device 1 and the communication method of the router 3. Specifically, the connector 2 converts the controlled device information 1a transmitted from the device 1 by a specific communication method of the device 1 into communication data conforming to the wireless communication method known as Wi-Fi (registered trademark), and then it transmits the data to the router 3. Moreover, the connector 2 converts setting information transmitted from the router 3 by the wireless communication method into communication data conforming to the communication method of the device 1, and then it transmits the communication data to the device 1. The setting information is information used to monitor and operate the device 1, and it is transmitted to the device 1 via the connector 2 when the terminal 7 is operated.

The mode of the connector 2 can be selected as the outdoor mode or the indoor mode. The mode of the connector 2 is switched by the operation of the terminal 7 or by using a mode selector switch provided to the connector 2.

The connector 2 set to the indoor mode accesses the device 1 at regular intervals to request transmission of the controlled device information 1a, and it stores the controlled device information 1a from the device 1. The controlled device information 1a stored in the connector 2 at this time can only be the latest information, or it can be data of the last five minutes stored in the connector 2 at one minute intervals so as to be transmitted to the terminal 7. Upon receiving a transmission request from the terminal 7, the connector 2 transmits the controlled device information 1a that is stored to the terminal 7 via the router 3. The setting information from the terminal 7 is transmitted to the connector 2 via the router 3, and the connector 2 transfers the setting information to the device 1.

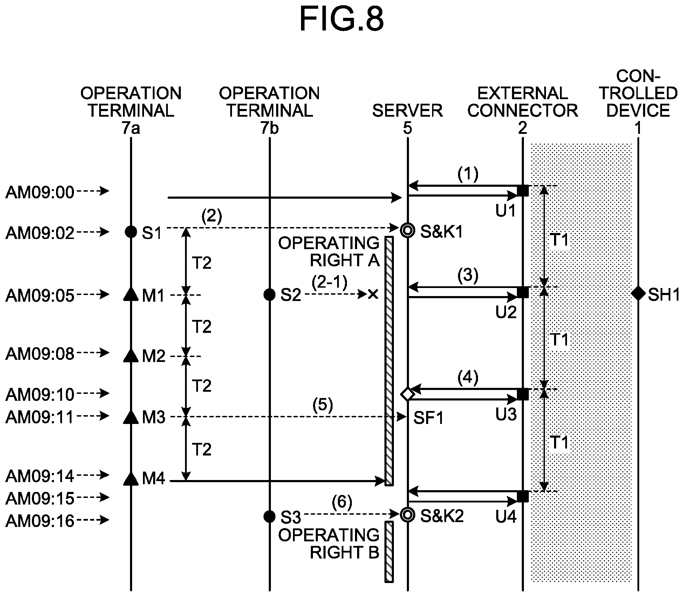

As described above, the connector 2 and the terminal 7 switched to the indoor mode communicate with each other but not via the server 5. The device 1 can thus be monitored and operated instantly independently of a communication cycle T1 (see FIG. 8) between the connector 2 and the server 5. An increase in the load on the server 5 can also be avoided because the amount of information uploaded to the server 5 is reduced.

Although the device 1 can be operated by the handheld operation terminal 4, the use of the connector 2 allows the communication method of the device 1 to be converted into a general-purpose communication method such as Wi-Fi (registered trademark) or Ethernet (registered trademark). This means that, when the terminal 7 supporting Wi-Fi (registered trademark) is provided inside the home, the terminal 7 can monitor and operate the device 1 by performing wireless LAN communication via the router 3.

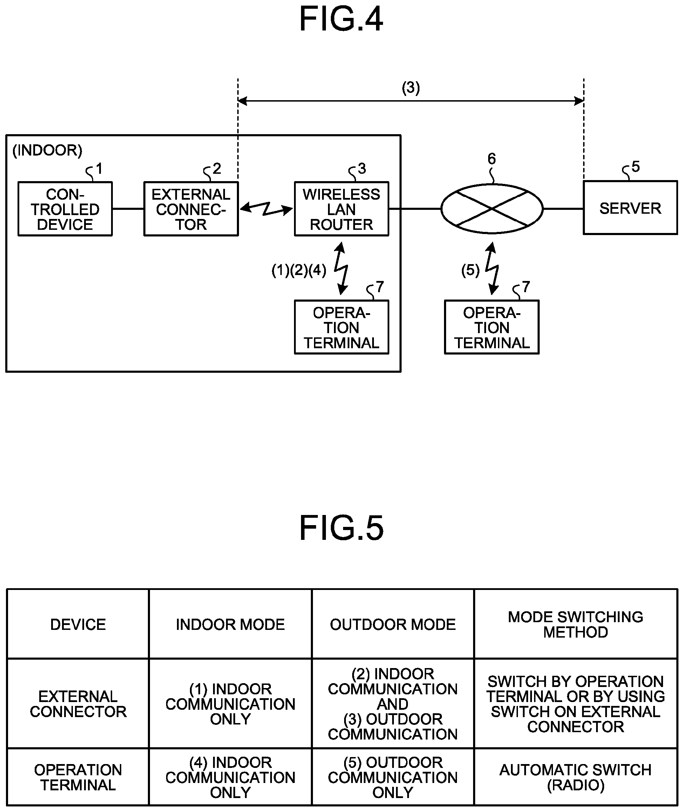

In addition, when the outdoor mode is selected as the communication mode, indoor communication and outdoor communication are available (see FIG. 5). Indoor communication is communication performed between the terminal 7 and the connector 2 but not via the server 5 when the indoor operation is performed by the terminal 7 that is in operation in the indoor mode with the operating right given thereto. Outdoor communication is communication performed between the terminal 7 and the connector 2 via the server 5 when the outdoor operation is performed by the terminal 7 that is in operation in the outdoor mode with the operating right given thereto.

When the terminal 7 is in wireless LAN communication with the router 3, the connector 2 accepts communication from the terminal 7 via the router 3 by using the indoor communication. During the indoor communication, the connector 2 accesses the device 1 at regular intervals to request transmission of the controlled device information 1a, and it stores the controlled device information 1a from the device 1. The regular intervals can be, for example, one second intervals. Upon receiving a transmission request from the terminal 7, the connector 2 storing the controlled device information 1a transmits the controlled device information 1a to the terminal 7 via the router 3. The setting information from the terminal 7 is transmitted to the connector 2 via the router 3, and the connector 2 transfers the setting information to the device 1. Thus, even in the outdoor mode, the connector 2 is configured to perform the indoor communication but not via the server 5 when the terminal 7 is located in the wireless LAN environment.

When the terminal 7 is not in wireless LAN communication with the router 3, the connector 2 accesses the device 1 at regular intervals to request transmission of the controlled device information 1a, and it stores the controlled device information 1a from the device 1. Then the connector 2, during the outdoor communication, accesses the unique area within the database server 5-2 at the communication cycle T1 to upload the controlled device information 1a that is stored, and at the same time it downloads the setting information stored in the unique area within the database server 5-2 so as to transmit the information to the device 1. The communication cycle T1 can be set, for example, to five minutes. With the setting information downloaded, the terminal 7 located outside the home can indirectly operate the device 1 via the server 5. The access to the device 1 via the Internet requires a dedicated communication path (IP address). In general, one contract is made with a provider. It is thus desirable to employ a communication method that monitors and operates the device 1 without changing the current internet contract in order to reduce the cost required for securing the dedicated communication path. The device control system 100 according to the present embodiment is configured such that the terminal 7 operated outside the home and the connector 2 transmit information via the server 5.

Note that, for usage, the connector 2 is generally connected to the device 1, and the connector 2 can be driven by power supplied from the device 1 by establishing an interconnection with the device 1 by using any of a power line for power supply, a ground line, and a communication line. Regarding the communication data, the terminal 7 needs to recognize the communication protocol of the device 1, and the connector 2 can convert the protocol into a general-purpose communication protocol or into a communication protocol specific to the device 1. When the function of the device 1 is extended, the function of the terminal 7 can be extended as well. Moreover, when a user of the terminal 7 controls the operation of the device 1, an operation and a response at the time the terminal 7 is operated are requested. The connector 2 is thus configured to be always able to accept communication from the terminal 7.

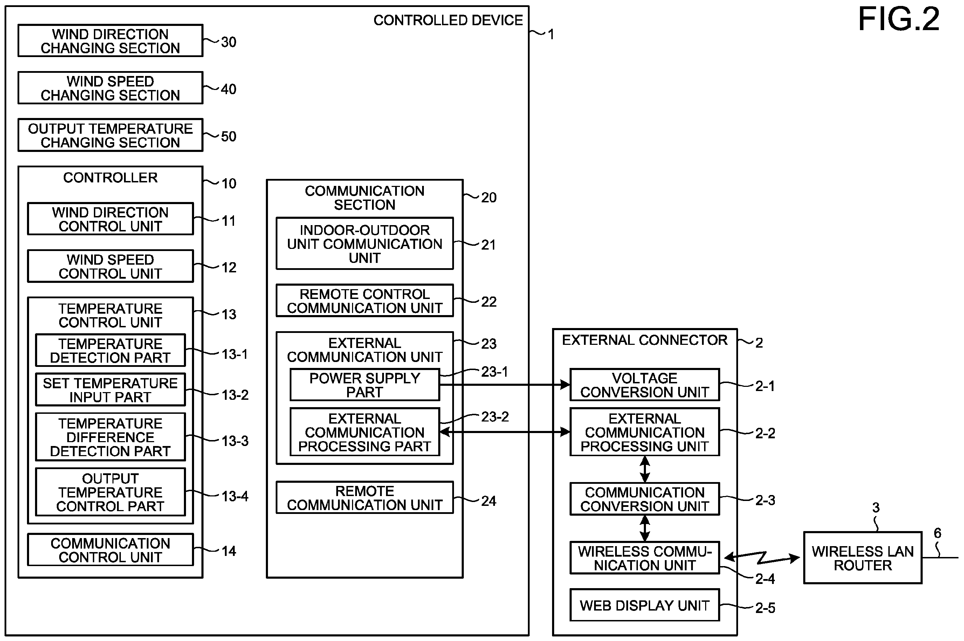

FIG. 2 is a diagram illustrating an internal configuration of each of the controlled device and the external connector. The device 1 includes a controller 10 that performs overall control on the device 1; a communication section 20 that performs communication with the handheld operation terminal 4 and the connector 2; a wind direction changing section 30 that operates upper and lower flaps as well as left and right vanes to change the direction of a stream of air blown out toward an indoor space, namely in upward, downward, left, and right directions in the indoor space; a wind speed changing section 40 that controls a cross-flow fan so that the wind speed of the stream of air is changed; and an output temperature changing section 50 that controls the operation of a refrigeration cycle of the device 1 so that the temperature of the stream of air blown is changed.

The controller 10 includes a wind direction control unit 11 that operates the wind direction changing section 30 and controls the direction of the stream of air blown out from the device 1; a wind speed control unit 12 that operates the wind speed changing section 40 and controls the wind speed of the stream of air blown out; a temperature control unit 13 that operates the output temperature changing section 50 and controls the temperature of the stream of air blown out; and a communication control unit 14 that operates the communication section 20 and communicates with a device other than the device 1.

The temperature control unit 13 includes a temperature detection part 13-1 that detects an indoor temperature by using a thermistor installed inside an indoor unit of the device 1 or a thermistor installed in the handheld operation terminal 4; a set temperature input part 13-2 that inputs a set temperature set using the handheld operation terminal 4 or the terminal 7 via the communication section; a temperature difference detection part 13-3 that detects a temperature difference between the indoor temperature detected by the temperature detection part 13-1 and the set temperature input to the set temperature input part 13-2 by comparing the temperatures; and an output temperature control part 13-4 that controls the temperature of the stream of air blown out by operating the output temperature changing section 50 on the basis of the temperature difference detected by the temperature difference detection part 13-3.

The communication section 20 includes an indoor-outdoor unit communication unit 21 that performs communication between the indoor unit and an outdoor unit of the device 1; a remote control communication unit 22 that performs communication with the handheld operation terminal 4; an external communication unit 23; and the remote communication unit 24.

The external communication unit 23 is an interface that allows the device 1 to have versatility in the communication performed thereby, and it is connected to the connector 2, which is a general-purpose communication adapter to be used in performing communication with a device provided outside the device 1. The external communication unit 23 includes a power supply part 23-1 that supplies power to the connector 2 as well as an external communication processing part 23-2 that communicates the controlled device information 1a and the setting information with the connector 2. The remote communication unit 24 has both the functionality of the external communication unit 23 and the function of the connector 2, and it is an interface provided to perform communication without using the connector 2. Therefore, the external communication unit 23 or the remote communication unit 24 can be used in order for the terminal 7 to monitor and operate the device 1. Note however that the connector 2 needs to be connected to the external communication unit 23 when the remote communication unit 24 is not used.

The connector 2 includes a voltage conversion unit 2-1 that converts a voltage supplied from the power supply part 23-1 into a voltage at the voltage level used inside the connector 2; an external communication processing unit 2-2 that communicates with the external communication processing part 23-2; a communication conversion unit 2-3 that converts data from the device 1 received by the external communication processing unit 2-2 into communication data conforming to the wireless communication method and that converts communication data from the router 3 received by a wireless communication unit 2-4 into communication data conforming to the communication method of the device 1; the wireless communication unit 2-4 that transmits the communication data converted by the communication conversion unit 2-3 to the router 3 by the wireless communication method and transmits the communication data from the router 3 to the communication conversion unit 2-3; and a web display unit 2-5.

The power supply part 23-1 and the voltage conversion unit 2-1 are connected by a power supply wire, and the external communication processing part 23-2 and the external communication processing unit 2-2 are connected by a communication wire. The power supply wire is a wire for supplying the power consumed by the connector 2; therefore, a wire having the same specification as that of the communication wire can generally be used as the power supply wire. Note that the power supply part 23-1 need not be installed in the device 1 and an alternating current (AC) adapter to feed power from the AC adapter to the connector 2 can be substituted for the power supply part 23-1. However, the device 1 is often installed in the upper part of the room, especially on the wall of the upper part of the room, in which case laying of the power supply wire between the AC adapter and the connector 2 can be inconvenient when a power outlet is located near the floor of the room. It is thus advantageous in terms of convenience to install the functionality of the connector 2 in the device 1.

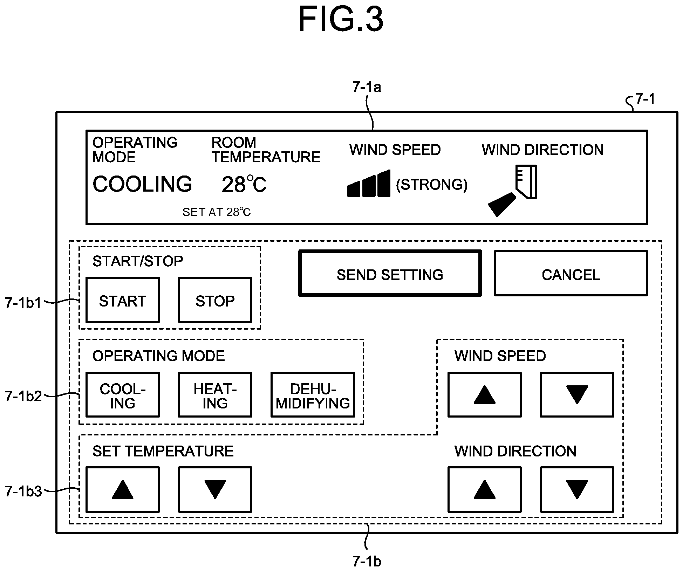

FIG. 3 is a diagram illustrating an example of an operation screen displayed on the operation terminal. FIG. 3 illustrates an example of an operation screen 7-1 displayed on a touch panel liquid crystal display by a display control function (not illustrated) of the terminal 7. The operation screen 7-1 is an example of a case where the device 1 to be operated is an air conditioner. The operation screen 7-1 includes an information display area 7-1a displaying a setting that is set by a user and the operating state of the device 1 and also includes an operation button information display area 7-1b. The setting for example includes the operating mode of the device 1, such as cooling, heating, dehumidification, or fanning. The operating state includes, for example, the room temperature detected by the device 1, the speed of wind blown out from the device 1, and the direction of the wind blown out from the device 1.

An application used to display the operation screen 7-1 is created in advance for each type of the device 1 and stored on the server 5. The application is then stored on the terminal 7 when the terminal 7 accesses the server 5 and downloads the application. The operation screen 7-1 is created by the application stored on the terminal 7.

A plurality of operation buttons are displayed in the operation button information display area 7-1b. The operation buttons include, for example, a start/stop operation button 7-1b1 including a start button for starting the operation of the device 1 and a stop button for stopping the device 1; an operating mode button 7-1b2 for setting the operating mode; and an operation button 7-1b3 for setting changes to the set temperature, the wind speed, and the wind direction. Note that although the information display area 7-1a of FIG. 3 illustrates the wind direction viewed from the side of the indoor unit as an example of the indication of the wind direction of the indoor unit, the wind direction can instead be indicated with words such as "upward", "horizontal", and "downward" instead of as in the illustration. Likewise, the wind speed can be indicated only with words such as "still", "weak", "medium", and "strong". Moreover, the terminal cannot distinguish whether the operation button is pressed by mistake or pressed to make a change in a case where the operation setting is reflected immediately after the start button is pressed. Accordingly, a send button for sending the setting and also for confirming the operation can be provided in the operation button information display area 7-1b so that the terminal 7 sends the setting [only?] when the send button is pressed. This can prevent a misoperation caused by pressing the operation button by mistake.

FIG. 4 is a first diagram describing the communication mode applied to the device control system. FIG. 5 is a second diagram describing the communication mode applied to the device control system. As described above, the two types of communication modes are set to each of the connector 2 and the terminal 7. The communications described from (1) to (5) in FIG. 5 correspond to (1) to (5) in FIG. 4.

In the indoor communication (1), (2), and (4), the device 1, without using the server 5, is operated and monitored between the connector 2 and the terminal 7, which is located within the range of the radio waves from the router 3, which is connected to the connector 2. In the outdoor communication (3) and (5), the device 1, using the server 5, is operated and monitored between the connector 2 and the terminal 7, which is located outside the range of the radio waves from the router 3, which is connected to the connector 2.

In the indoor communication (1), (2), and (4), communication occurs between the connector 2 and the terminal 7 only when the operation setting is made by the terminal 7, and the communication is transmitted without going through the server 5. In the outdoor communication (3) and (5), data of the device 1 is uploaded to the server 5 at the communication cycle T1 and at the same time that the configuration information of the server 5 is downloaded to the connector 2. Consequently, communication occurs regardless of whether the operation setting is performed by the terminal 7 in the outdoor communication (3) and (5), which is different to the indoor communication (1), (2), and (4), in which communication occurs between the connector 2 and the terminal 7 only when the operation setting is performed by the terminal 7.

The device 1 can be operated and monitored without the server 5 during the indoor communication (1) and (4) when the indoor mode is selected by both the connector 2 and the terminal 7. When the outdoor mode is selected by both the connector 2 and the terminal 7, the device 1 can be operated and monitored regardless of whether or not the terminal 7 is located outside the home and regardless of the communication mode of the terminal 7.

In order to reduce the connection load on the server 5 due to the communication cycle T1 between the connector 2 and the server 5, the device control system 100 can be configured to set the connector 2 to the indoor mode as a default and to switch the mode to the outdoor mode by a switch in the connector 2 or the terminal 7 only when the mode needs to be switched to the outdoor mode.

Moreover, in order to perform switching of the mode more securely, the device control system 100 can be configured such that the terminal 7 can switch the communication mode of the connector 2 only when the terminal 7 is in the indoor mode.

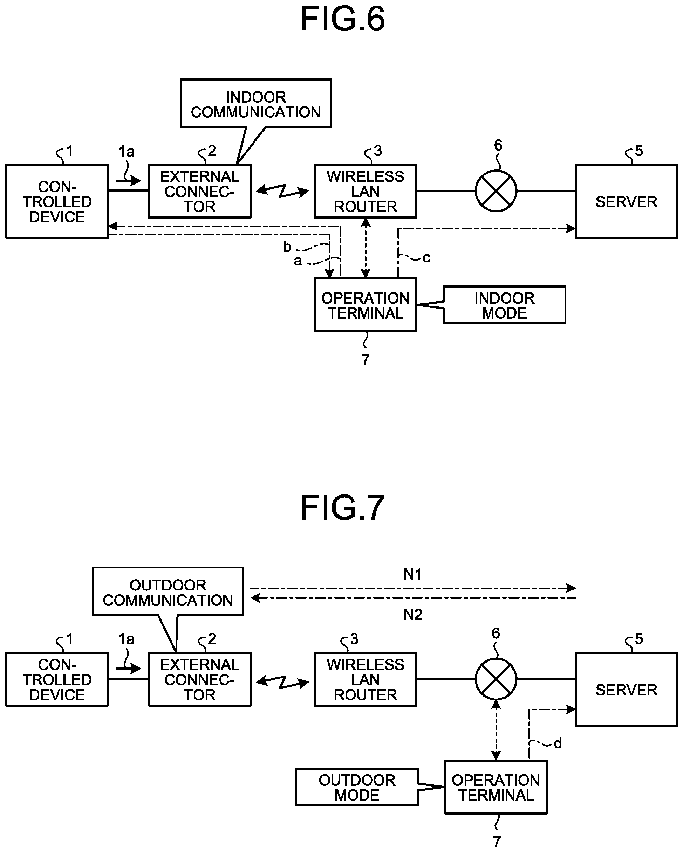

FIG. 6 is a diagram describing an operation when the operation terminal is located in an environment in which wireless LAN communication can be performed. The terminal 7 located within range of the radio waves from the router 3, which is connected to the connector 2, is switched to the indoor mode, at which time the connector 2 performs the indoor communication (1) or (2) as illustrated in FIGS. 4 and 5. When a setting operation is performed by the terminal 7 switched to the indoor mode, the setting information is transmitted to the device 1 by going through the router 3 and then the connector 2 (a communication path a). The controlled device information 1a from the device 1 is transmitted to the terminal 7 by going through the connector 2 and then the router 3 (a communication path b). Note that the terminal 7 and the router 3 are connected by a general-purpose encryption method used by a wireless LAN such as a Wi-Fi protected access-advanced encryption standard (WPA-AES) and a temporal key integrity protocol (TKIP), and the device 1 can be operated in the indoor mode when located within range of the radio waves from the router 3, which is connected to the connector 2.

The configuration information of the terminal 7 is also transmitted to the server 5 through the router 3 and then the network 6 (a communication path c); and the operating right management unit 5-3, having received the configuration information, gives the operating right to the terminal 7 and registers the operating right. The operating right of the terminal 7 comes into effect from the point when the operating right is registered, thereby allowing the terminal 7 to transmit settings to the connector 2 so that the settings of the terminal 7 are enabled. The operating right of the terminal 7 is thus managed even when the operation setting is performed in the indoor mode. This means that the operation from the terminal 7 can be reliably reflected in the device 1 while preventing a situation where an operation by another terminal 7 inhibits the operation setting from being reflected in the device 1 even when the device is operated.

FIG. 7 is a diagram describing an operation when the operation terminal is located in the environment in which wireless LAN communication cannot be performed. The difference between FIG. 7 and FIG. 6 is that in FIG. 7 the terminal 7 is connected to the network 6 by Internet communication. Note that when the terminal 7 is located indoors, the communication as illustrated in FIG. 7 is performed if wireless LAN communication is not enabled.

The terminal 7 is switched to the outdoor mode when not located within range of the radio waves from the router 3 that is connected to the connector 2. The connector 2 uploads the controlled device information 1a as well as its own MAC address and serial number to the server 5 (a communication path N1), and it downloads connector data stored in the database server 5-2 (a communication path N2). The connector data includes, for example, configuration data managed by the MAC address and the serial number. The device 1 changes the setting on the basis of the configuration data when the configuration data has been changed.

Note that an operation from an unspecified terminal 7 can be prevented by managing a data area to be operated in the server 5 by using a MAC address and by allowing a plurality of the terminals 7 to operate and monitor only the data area corresponding to the information of the device 1 registered in advance with the MAC address information. Unlike the operation from a position such as the handheld operation terminal 4 from which the device 1 can be seen, the outdoor operation can possibly result in an unintended setting due to a misoperation. The operating right is managed in order to prevent such a situation as mentioned above; but the state of the device 1 can still be checked by a terminal other than the terminal 7 to which the operating right is given. Note that the operating right is given not only when the terminal 7 performs the setting operation but also when the terminal 7 is activated.

The configuration information of the terminal 7 is transmitted to the server 5 via the network 6 (a communication path d). Upon receiving the configuration information, the operating right management unit 5-3 gives the operating right to the terminal 7 and registers the operating right. The operating right of the terminal 7 comes into effect at the point when the operating right is registered.

FIG. 8 is a sequence diagram illustrating the operation of the device control system. Two terminals 7a and 7b illustrated in FIG. 8 each have the function similar to the functionality of the terminal 7 described above. Here, there will be a description of the operation when the terminal 7a performs an operation before the terminal 7b while the operating right is not given to the terminal 7a or to the terminal 7b.

Reference numeral Un (n is an integer of one or greater) indicates a point at which the connector 2 uploads the controlled device information 1a to the server 5 during the communication cycle T1 and downloads the setting information stored in the server 5. Reference numeral Mn (n is an integer of one or greater) indicates a point at which the terminal 7a updates a state of display to the latest state during a screen update cycle T2. The screen update cycle T2 is a cycle during which the terminal 7 automatically updates the screen, and it can, for example, be set to three minutes.

When the controlled device information 1a is uploaded (U1) from the connector 2 to the server 5 at 09: 00 AM (1) and an instruction to change a setting (S1) of the device 1 is made from the terminal 7a to the server 5 at 09: 02 AM (2), the connector 2 transmits a setting instruction downloaded at point U2 at 09: 05 AM to the device 1 (3). This means that a setting (SH1) is reflected in the device 1.

The connector 2 uploads information of the setting (SH1) reflected in the device 1 to the server 5 at point U3 at 09: 10 AM after the setting (SH1) is reflected in the device 1 (4). This means that the setting of the device 1 is fed back to the server 5 (SF1). The terminal 7a can thus provide confirmation that the setting has been reflected in the device 1 at point M3 at 09: 11 AM (5).

Note that upon receiving the setting information from the terminal 7, the external communication unit 23 or the remote communication unit 24 of the device 1 illustrated in FIG. 2 transmits the setting information to the controller 10, which then controls the operation in the device 1 on the basis of the setting information. Specifically, the output temperature control part 13-4, upon receiving a piece of setting information related to an increase or a decrease in the set temperature, controls the output temperature changing section 50 so as to obtain an output temperature corresponding to the set temperature. The indoor temperature is set according to the set temperature when the room temperature at a specific time in summer is 28 degrees and the set temperature set by the terminal 7 is also 28 degrees. When a person coming home from outdoors feel hot in the room and operates a set temperature button to lower the set temperature by two degrees, the temperature input to the set temperature input part 13-2 is 26 degrees while the temperature detected by the temperature detection part 13-1 is 28 degrees. The temperature difference detection part 13-3 detects that the indoor temperature is higher than the set temperature by 2 degrees and therefore the output temperature control part 13-4 lowers the indoor temperature by two degrees. The output temperature changing section 50 is thus used to control the amount of refrigerant that is circulating between the indoor unit and the outdoor unit. This means that the temperature of the refrigerant is lowered so as to lower the indoor temperature.

When the device 1 receives input information of the operation button for setting the wind speed, the wind speed control unit 12 controls the wind speed changing section 40 such that the wind speed corresponding to the set wind speed value be obtained. Specifically, when the wind speed is set to "strong" by the terminal 7 from a state in which the wind speed is set to "weak" at a specific time, the wind speed control unit 12 of the device 1 changes the wind speed by changing the wind speed to which the wind speed changing section 40 is set to the rotational speed of a fan corresponding to the value of "strong" registered in advance.

When the device 1 receives input information of the operation button for setting the wind direction, the wind direction control unit 11 controls the wind direction changing section 30 such that the wind direction corresponding to the set wind direction value is obtained. Specifically, when the terminal 7 transmits a signal for changing the wind direction upward while the wind is blown downward at a specific time, the communication section 20 of the device 1 receives a setting change signal from the terminal 7 and transmits the signal to the controller 10 so that the wind direction control unit 11 of the controller 10 changes the wind direction by changing the orientation of the flap of the wind direction changing section 30 upward.

The device 1 can also be operated from the handheld operation terminal 4, in which case a remote control signal from the handheld operation terminal 4 is received by the remote control communication unit 22 and is transmitted to the controller 10. The subsequent processing is the same as when the operation signal is received from the terminal 7.

The device 1 transmits the aforementioned operating state information to the terminal 7 via the external communication unit 23 or the remote communication unit 24. The terminal 7, having received the operating state information, displays the operating mode and the wind direction indicated by the controlled device information 1a. The terminal 7 receives the operating state information and can check the latest operating state of the device 1. This can be done even when the settings of the device 1 have been changed by the handheld operation terminal 4.

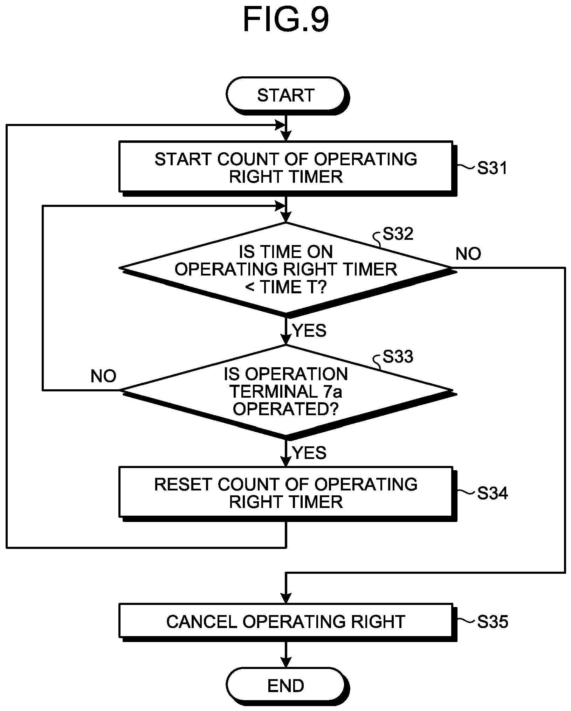

Next, the operation of managing the operating right will be described. FIG. 9 is a flowchart of the operating right management operation performed by the operating right management unit illustrated in FIG. 1. In the following description, it is assumed that the operating right is given to the terminal 7a.

When the operating right of the terminal 7a is registered, the operating right management unit 5-3 starts to count an operating right timer when the operating right is registered (step S31). Although the operating right timer can be an up counter or a down counter, it is assumed here in this description that an up counter is used.

When the operating right timer indicates a time before preset time T (Yes in step S32), the operating right management unit 5-3 determines whether or not the terminal 7a is operating, the determination being on the basis of the presence or absence of a setting operation request that is the setting information from the terminal 7a. When the terminal 7a is not operating (No in step S33), the operating right management unit determines whether or not the operating right timer has run over time T (step S32).

When the terminal 7a is determined at step S33 to be operating (Yes in step S33), the operating right management unit 5-3 resets the count of the operating right timer (step S34) and starts the count of the operating right timer again (step S31).

When it is determined at step S32 that the terminal 7a is not operating and the operating right timer has run over time T (No in step S32), the operating right management unit 5-3 cancels the operating right of the terminal 7a (step S35).

When the communication cycle T1 of the connector 2 and the server 5 is set to five minutes, the setting operation request is transmitted to the device 1 in the first five minutes; and the state of the device 1 is transmitted to the server 5 in the next five minutes so that, in order to maintain the operating right for the duration corresponding to the period of time between the setting operation request and the displaying of the state, the duration of the operating right can be set to a time (15 minutes) that is three times as long as the communication cycle T1. The duration of the operating right is set as the aforementioned time T and the operation of the device 1 can be maintained in accordance with an instruction from a user of the terminal 7a until time T elapses from the time when the terminal 7a is operated, thereby avoiding a situation where frequently changing operations result in misoperations.

Note that when the operating right of the terminal 7a is canceled after the lapse of time T, the operating right management unit 5-3 can transmit the information that the operating right of the terminal 7a has been canceled to the terminal 7b but not to the terminal 7a. Each terminal 7 can also be configured to be selectable whether or not the transmission is required.

Depending on the time at which the terminal 7a performs the setting operation on the device 1, the communication method, and the communication path, the setting operation can be reflected in a shorter time than the communication cycle T1. In that case, the duration of the operating right can be made shorter than time T. Time T can, for example, be set to a time (15 minutes) that is three times as long as the communication cycle T1 as described above.

The operating right need not be maintained for time T. That is, the terminal 7b waiting for the operating right to be given thereto can be registered in the operating right management unit 5-3, which means it can then give the operating right to the terminal 7b at the time when the terminal 7a having the operating right is logged out or shut down.

Next, the operation of managing the operating right will be specifically described by using the sequence illustrated in FIG. 8.

The controlled device information 1a is uploaded (U1) from the connector 2 to the server 5 at 09: 00 AM (1). In the case where the operating right is not given to the terminal 7a nor to the terminal 7b at the time when the terminal 7a makes the instruction to change the setting (S1) of the device 1 to the server 5 at 09: 02 AM, the server 5 accepts the setting S1 from the terminal 7a and at the same time it registers that the operating right is given to the terminal 7a (S&K1) (2). An operating right A of the terminal 7a comes into effect from point S&K1.

A setting change instruction (S2) is transmitted to the server 5 when the terminal 7b performs a setting operation on the same device 1 at 09: 05 AM after the operating right A is given to the terminal 7a; however, the server 5 recognizes the operating right A and responds to the terminal 7b with the fact that the terminal does not have the operating right (2-1). The connector 2 transmits the setting instruction downloaded at point U2 at 09: 05 AM to the device 1 (3). This means that the setting (SH1) is reflected in the device 1. The connector 2 uploads information of the setting (SH1) reflected in the device 1 to the server 5 at point U3 at 09: 10 AM after the setting (SH1) is reflected in the device 1 (4). This means that the setting of the device 1 is fed back to the server 5 (SF1). The terminal 7a can thus confirm that the setting has been reflected in the device 1 at point M3 at 09: 11 AM (5) .

The user of the terminal 7a can confirm at point M3 that the content set in the terminal 7a is reflected in the device 1 and therefore the server 5 can cancel the operating right A. However, sometimes the user of the terminal 7a cannot recognize the fact that the setting is reflected in the device 1 at point M3. Even if the user recognizes that the setting is reflected, the setting can be possibly changed to another setting by a user of the terminal 7b. In order to prevent such a situation, the server 5 can maintain the operating right A until a predetermined period of time elapses after point M3 at which the setting is successfully fed back as illustrated by an example in FIG. 8 in which the operating right A is maintained from point M3 up to the point of the next state update.

Then, when a setting change instruction (S3) is issued by the terminal 7b at 09: 16 AM by which the operating right A is canceled, the operating right management unit 5-3 accepts the instruction (S3) from the terminal 7b and at the same time it registers an operating right B of the terminal 7b (S&K2) (6). This means that the operating right B of the terminal 7b comes into effect.

Note that the communication cycle T1 is set to five minutes in the present embodiment but is not limited to five minutes. The operation is reflected more quickly as the communication cycle is set shorter, which however causes an increase in the communication load when a large number of the devices 1 are connected to the server 5. Therefore, the communication cycle T1 is desirably set to an optimum value in consideration of the device 1 connected to the server 5. Moreover, the device 1 and the connector 2 perform communication in which the device 1 responds to a request of the connector 2, for example, at one second intervals.

Next, functions and operations for solving the aforementioned problem in the device control system 100 will be described.

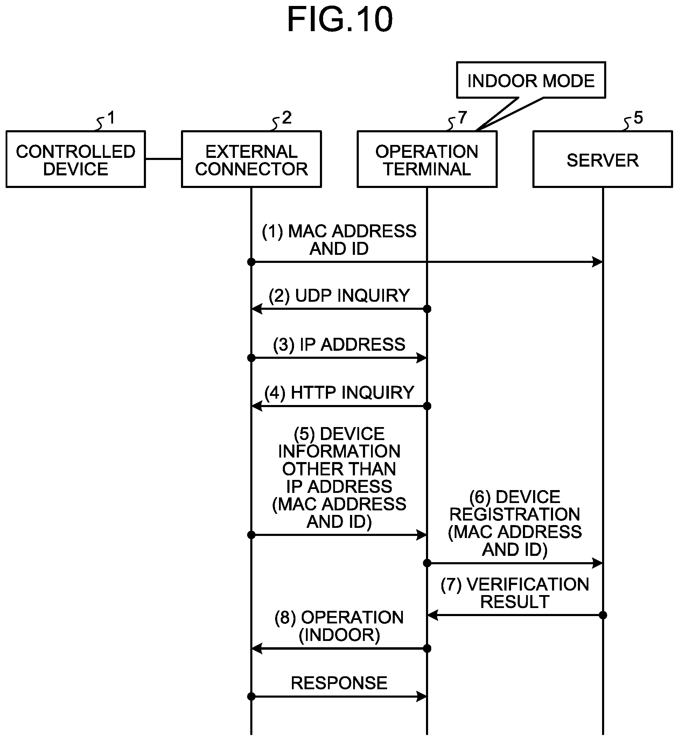

FIG. 10 is a sequence diagram for registering information of the external connector connected to the router in the operation terminal in the device control system according to the embodiment. The device 1, the connector 2, the terminal 7, and the server 5 illustrated in FIG. 10 make up the device control system 100.

The connector 2 stores the controlled device information 1a of the device 1 and has uniform resource locator (URL) information for accessing the dedicated database server 5-2 that has data used to perform the operation setting. The connector 2 transmits device information of the connector 2 to the URL; and the server 5 has a data area corresponding to an MAC address records and records the device information and setting information received in the area (1). The device information of the connector 2 includes, for example, the MAC address and an identification (ID) number.

After the connector 2 transmits the device information of the connector 2 to the server 5, the terminal 7 in the indoor mode generally performs a boot-up process and thereafter broadcasts a specific response request by user datagram protocol (UDP) communication to the device 1 and the connector 2 that are connected to a local area network in a single home (2). The response request is an inquiry asking "is the device the device A?". Not all the devices connected to the local area network in the single same home have to respond to the inquiry, but only a specific device such as the device 1 or the connector 2 can respond to the inquiry. Moreover, the inquiry need not ask whether or not the device is the device A, but can ask for any of a model name of the device, a manufacturer's name, and a series of numbers. The load of processing a response from an unwanted device is eliminated when only a specific device is configured to perform the UDP response in this manner.

An IP address of the device is assigned to the UDP response to the UDP inquiry, so that the terminal 7 can acquire the IP address of only a specific device (3).

A plurality of devices can perform the UDP responses, in which case the terminal 7 inquires of the IP addresses that have responded the device information, by HTTP communication, other than the IP addresses (4). The device information includes, for example, the MAC address, the ID number, the model name of the device 1, and a software version. Note that the connector 2 is provided with a device information response function in advance so as to respond to the HTTP inquiry from the terminal 7 with the device information. The terminal 7 in the indoor mode can thus acquire the IP address of only the device to be connected and the device information other than the IP address. The device information other than the IP address includes, for example, the MAC address.

The terminal 7 receives the device information of the device transmitted from the connector 2 and registers the device information in the terminal 7 (5). The registration of the device information in the terminal 7 is hereinafter referred to as "device registration". Note that the terminal 7 can be configured to register the acquired MAC address in the terminal 7 by automatic input. Registration of the MAC address by automatic input has an advantage that a user need not check the MAC address of the device.

The terminal 7 transfers the acquired MAC address and ID to the server 5 (6). The server 5 having received the MAC address and the ID from the terminal 7 verifies the MAC address with the MAC address of each device registered in advance in the server 5, thereby determining whether or not each device registered in the terminal 7 corresponds with each device registered in the server 5 and transmitting the verification result to the terminal 7 (7). The terminal 7 performs communication for operating the device 1 and the connector 2, each being an example of the device, on the basis of the verification result from the server 5 and the IP address transmitted from the connector 2 (8). The terminal 7 can thus monitor and operate the device 1 and the connector 2 each being an example of the device registered in the terminal 7.

Note that the verification of the device by the server 5 can include a mechanism for verifying whether or not a device to be connected to the terminal 7 is located in the same home as the terminal 7. The MAC address includes a number specific to the manufacturer in its high-order bits and a unique number in its low-order bits such as a serial number. Therefore, if a wrong MAC address of the device is operated by the terminal 7 by a user of the terminal 7 located outside the home, it may allow operation using only the information of the MAC address results in operating the device 1 installed in another home. In order to prevent such a misoperation, the server can be configured to verify whether or not the MAC address value is authentic by using the production number, the serial number, and the ID written on the body of each of the device 1 and the connector 2 as authentication keys.

As a specific example of this mechanism, the connector 2 operating at point (1) in FIG. 10 transmits its own MAC address and ID to the server 5, which accordingly recognizes the ID associated with the MAC address. Then, the user of the terminal 7 registers the MAC address and ID indicated on the body of each of the device 1 and the connector 2 on a device registration screen of the terminal 7 in the indoor mode. The information registered in the terminal 7 is transmitted to the server 5; and the server 5 having received the information verifies the MAC address and ID of the device registered in advance with the MAC address and ID registered in the terminal 7, and determines whether or not the device registered in the terminal 7 corresponds with the device registered in the server 5. If the devices correspond with each other, the specific device registered in the terminal 7 can be monitored and operated from the terminal 7.

The terminal 7 can also perform processing that confirms the IP address and processing that verifies the device upon starting the application, because the IP address assigned to the connector 2 from the router 3 can be changed in some cases. The terminal 7 can perform the processing that confirms the IP address and the processing that verifies the device again, after the terminal 7 having been unused for a long time, and is used again.

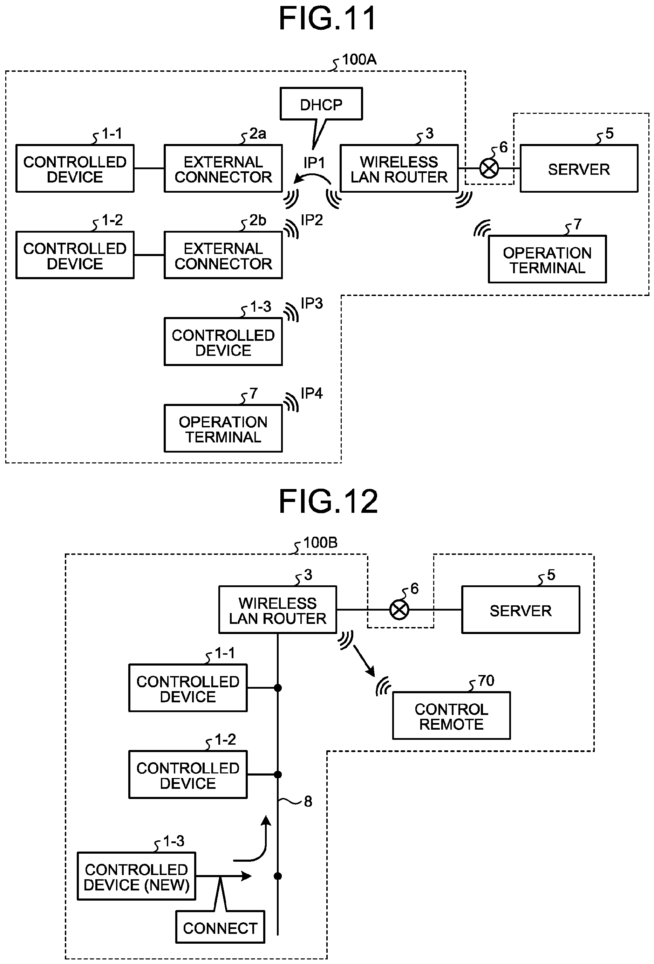

FIG. 11 is a first diagram describing a problem in the device control system according to a comparison example. FIG. 12 is a second diagram describing a problem in the device control system according to a comparison example.

A device control system 100A illustrated in FIG. 11 is a system that uses a wireless LAN and operates a plurality of devices 1-1, 1-2, and 1-3 installed indoors via the network 6. The router 3 connected to the network 6 has a DHCP functionality of automatically assigning a unique IP address to each of a plurality of devices connected to the router 3, the devices including a connector 2a, a connector 2b, the device 1-3, and the terminal 7. Here, the router 3 assigning the IP address to each device has the IP address of each device, whereas the terminal 7 does not have the IP addresses of the connectors 2a and 2b and thus cannot access the connectors 2a and 2b via the router 3 even if the terminal is to operate the devices 1-1 and 1-2.

In order to solve such a problem, a device control system 100B illustrated in FIG. 12 is configured as follows. Note that the device control system 100B corresponds to the conventional system disclosed in Patent Literature 1 described above. The router 3 having the DHCP function is connected between a LAN 8 and the network 6; and the plurality of devices 1-1 and 1-2 and a control remote 70 are connected to the router 3. The control remote 70 can monitor the states of the devices 1-1 and 1-2 via the router 3 and can perform the operation setting on the devices 1-1 and 1-2. When the device 1-3 is newly connected to the device control system 100B, the device 1-3 transmits device information of the device 1-3 required to be connected to the network 6 to all the devices connected to the LAN 8, which are the device 1-1, the device 1-2, and the router 3. The device information of the device 1-3 is also transmitted to the control remote 70 via the router 3 and is registered in the control remote 70. Accordingly, the IP address of the device 1-3 can be included in the device information of the device 1-3 to allow the control remote 70 to know the IP address of the device 1-3 and to operate the device 1-3.

However, the device control system 100B employs the DHCP function in which the IP address assigned can be changed irregularly. In this case the control remote 70 cannot access the device 1-3 via the network 6. Moreover, the device information of the device 1-3 newly connected to the LAN 8 is transmitted to all the devices connected to the LAN 8, and therefore the device control system 100B has some problems in terms of security.

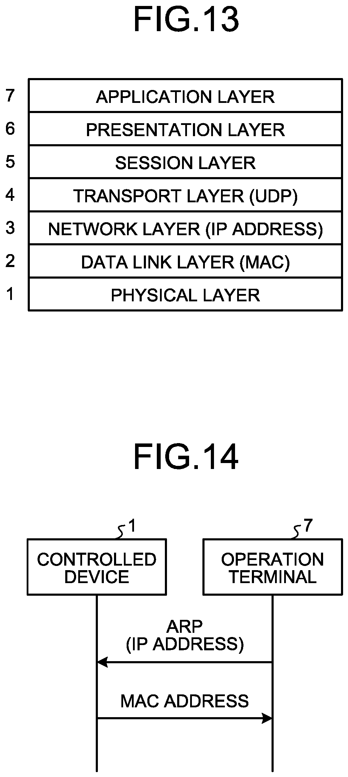

On the other hand, the IP address can be known by a method different from the method employed by the device control system 100B. FIG. 13 is a diagram illustrating an OSI reference model, and FIG. 14 is a diagram describing the flow of acquiring the MAC address by using an ARP.

In the OSI reference model of FIG. 13, a data link layer, which is a second layer, corresponds to the MAC address which is a fixed address assigned to each device; a network layer, which is a third layer, corresponds to the IP address; and a transport layer, which is a fourth layer, corresponds to a UDP that bridges the IP address of the network layer and the protocol of a session layer and above (such as the protocol of an application layer, which is a seventh layer). When the application of the terminal 7 instructs devices connected to a local network in a single home to return IP addresses by using the UDP, the terminal can acquire the IP address as a response but does not know which device has the IP address that has been acquired. The MAC address of the second layer identifying the device 1 can be acquired to solve such situation but cannot be checked from the application layer via the UDP.

Accordingly, the ARP of FIG. 14 can be used as a technique for inquiring the MAC address from the IP address. The ARP is a protocol for obtaining the MAC address from a destination IP address. The protocol is used such that a source broadcasts an inquiry about the MAC address of the IP address when the MAC address of a destination is unknown, and that a device not having the IP address specified does not respond to the inquiry, while a device having the corresponding IP address returns the MAC address. The ARP is used to acquire information on the MAC address unique to the device for an unspecified IP address, so that the IP address of the device can be known by verifying the acquired MAC address with the MAC address written on the body of the device.

However, the method using the ARP requests all the devices connected to the local network to respond with the IP addresses. Therefore, for the many IP addresses that are responded, the terminal needs to inquire as to which device the MAC address corresponds and that the verification takes time. Moreover, the problem of security arises because any operation terminal can request and respond.

The device control system 100 according to the present embodiment includes server 5 connected to the network 6 and controls at least one of the connector 2 and the device 1 indoors from the terminal 7 via the network 6. The terminal 7 located in the LAN environment provided indoors operates in the indoor mode which is a first communication mode for communicating with the connector 2 without the server 5. The terminal 7 not located in the LAN environment provided indoors operates in the outdoor mode which is a second communication mode for communicating with the device via the server 5. The terminal 7 set to the first communication mode is configured to request at least one of the connector 2 and the device 1 connected to the local network in the same home as the terminal 7 to respond with information including the IP address of the device. This configuration allows the terminal 7 to acquire only the IP address of a specific device, even when the IP address assigned by the DHCP functionality of the router 3 is changed.

Even when the device 1-3 is newly connected to the LAN 8 as in the device control system 100B illustrated in FIG. 12, the IP address of the device is not transmitted to all the devices so that the security problem can be avoided. Moreover, unlike the method using the ARP as illustrated in FIG. 14, the system need not take time to inquire as to which device the MAC address corresponds for each of the many IP addresses that responded.

Note that the terminal 7 can be configured to display the device already registered in the terminal 7 on the screen of the terminal 7. Specifically, the terminal 7 having received the device information including the MAC address as a response to an HTTP inquiry verifies the device information newly input to the terminal 7 with the device information already registered in the terminal 7. When finding the device already registered as a result of the verification, the terminal 7 displays the information of the registered device on the screen of the terminal 7 as "the device 1-1 is already registered". When finding an unregistered device, the terminal 7 displays on the screen the location of the unregistered device 1 and the name of the unregistered device 1 as well as an input field for the MAC address and an input field for the ID in association with the name of the unregistered device 1.

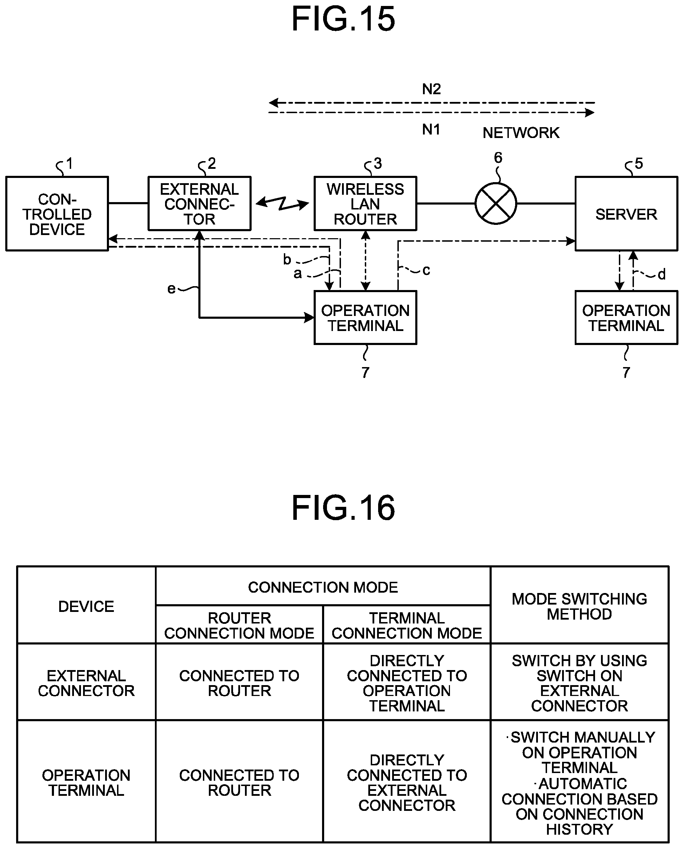

FIG. 15 is a diagram describing the communication mode featured in the present embodiment. FIG. 15 includes a communication path N1, a communication path N2, a communication path d, and a communication path e that are added in addition to the notations in FIG. 6. The connector 2 and the terminal 7 communicate with each other directly through the communication path e. Two cases will be described below as examples in which the connector 2 and the terminal 7 communicate with each other directly.

In the first case, the connector 2 is connected to the router 3 in order to construct the communication paths a, b, and c or to construct the communication path d; then the terminal 7 and the connector 2 are temporarily connected to each other in order for the terminal 7 to rewrite the configuration information of the wireless communication unit 2-4 of the connector 2.

In the second case, the terminal 7 and the connector 2 are directly connected to each other in order to monitor and operate the device 1 by the terminal 7, reading information on the external communication processing unit 2-2 recorded in the wireless communication unit 2-4 of the connector 2 or writing a setting into the wireless communication unit 2-4 of the connector 2 without going through the router 3 nor the server 5.

Details of the aforementioned two cases will now be described. Note that in the following description, a first connection mode in which the connector 2 is connected to the router 3 through the communication path a and the communication path b will be referred to as "router connection mode", and a second connection mode in which the connector 2 is connected to the terminal 7 through the communication path e will be referred to as "terminal connection mode". In the first connection mode, the connector 2 and the terminal 7 are connected to each other via the router 3. In the second connection mode, the connector 2 and the terminal 7 are connected to each other without through the router 3.

FIG. 16 is a table illustrating a method of switching the connection mode of each of the external connector and the operation terminal to the router connection mode or the terminal connection mode, and a connection state of each of the external connector and the operation terminal.

The external connector 2 and the operation terminal 7 set to the router connection mode are connected to the router 3 through the communication paths a and b illustrated in FIG. 15. The external connector 2 set to the terminal connection mode is directly connected to the operation terminal 7 through the communication path e illustrated in FIG. 15. The operation terminal 7 set to the terminal connection mode is directly connected to the external connector 2 through the communication path e illustrated in FIG. 15.

A method of switching the mode of the external connector 2 includes, for example, a method of switching a switch provided to the external connector 2. The switch provided to the external connector 2 corresponds to a switch 25, which will be described later. A method of switching the mode of the operation terminal 7 includes, for example, a method of manually changing the mode on the operation terminal 7 or a method of automatically establishing a connection on the basis of a connection history. In the method of automatically establishing a connection on the basis of the connection history, the operation terminal 7 is automatically connected to the external connector 2 or the router 3 upon detecting the external connector 2 or the router 3 to which the operation terminal 7 has once been connected. Note that the operation terminal 7 can be configured to display thereon a list of the routers 3 to which the operation terminal 7 has once been connected, and allow a user of the operation terminal 7 to select one of the routers 3.

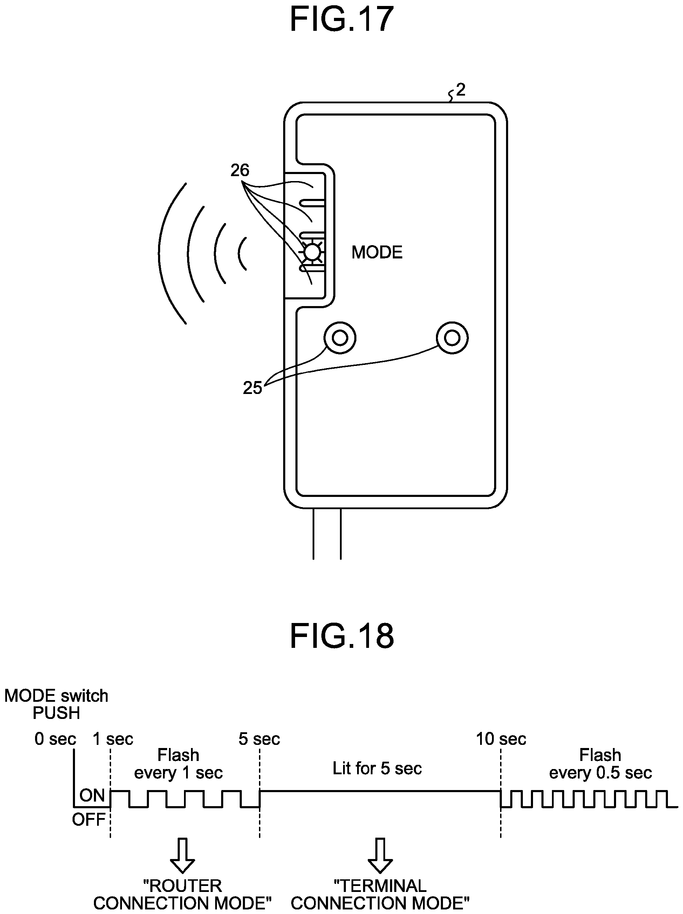

FIG. 17 is a diagram illustrating a product image of the external connector. The external connector 2 includes two of the switches 25 and LEDs 26 which are four diodes.

The external connector 2 is configured to switch the connection mode depending on the length of time during which one of the two switches 25 is pressed. The switch 25 will be referred to as "mode selector switch".

The external connector 2 does not have a display unit and is thus provided with the LEDs 26 so as to be able to indicate the state of the connection mode. One of the four LEDs 26 in FIG. 17 indicates the mode state. The LED 26 indicating the mode state will be referred to as "mode state LED".

FIG. 18 is a diagram describing an operation when the connection mode is switched with the mode selector switch of FIG. 17. The external connector 2 switches the connection mode to the router connection mode or the terminal connection mode depending on the length of time during which the mode selector switch is pressed.

"MODE switch PUSH" indicates that the mode selector switch is pressed. A point at which the mode selector switch is pressed is indicated by "0 sec". Each of "1 sec", "5 sec", and "10 sec" indicates the elapsed time from the point at which the mode selector switch is pressed. A state in which the mode state LED is turned off is indicated by "OFF" from "0 sec" to "1 sec". A state in which the mode state LED flashes at one second intervals is indicated by "Flash every 1 sec" from "1 sec" to "5 sec". A state in which the mode state LED is lit for five seconds is indicated by "Lit for 5 sec" from "5 sec" to "10 sec". A state in which the mode state LED flashes at 0.5 second intervals is indicated by "Flash every 0.5 sec" after "10 sec".

The external connector 2 causes the mode state LED to flash at one second intervals after the lapse of one second or longer and up to the lapse of five seconds from the point at which the mode selector switch is pressed. The external connector 2 shifts to the router connection mode when the mode selector switch is released during this period.

The external connector 2 causes the mode state LED to be lit after the lapse of five seconds or longer and up to the lapse of ten seconds from the point at which the mode selector switch is pressed. The external connector 2 switches the connection mode from the router connection mode to the terminal connection mode when the mode selector switch is released during this period.

The external connector 2 causes the mode state LED to flash at 0.5 second intervals after the lapse of ten seconds or longer from the point at which the mode selector switch is pressed. At this time, the external connector 2 can switch the connection mode to another connection mode depending on the time during which the mode selector switch is pressed.

Note that the external connector 2 is configured such that the connection mode and the LED lighting pattern are not switched until a predetermined period of time elapses from the point at which the mode selector switch is pressed. One second can be set as the predetermined period of time, for example. The predetermined period of time is set to prevent a false setting when the mode selector switch is pressed by mistake. Note that the external connector 2 having such a mode switching function can be mounted to the controlled device 1.

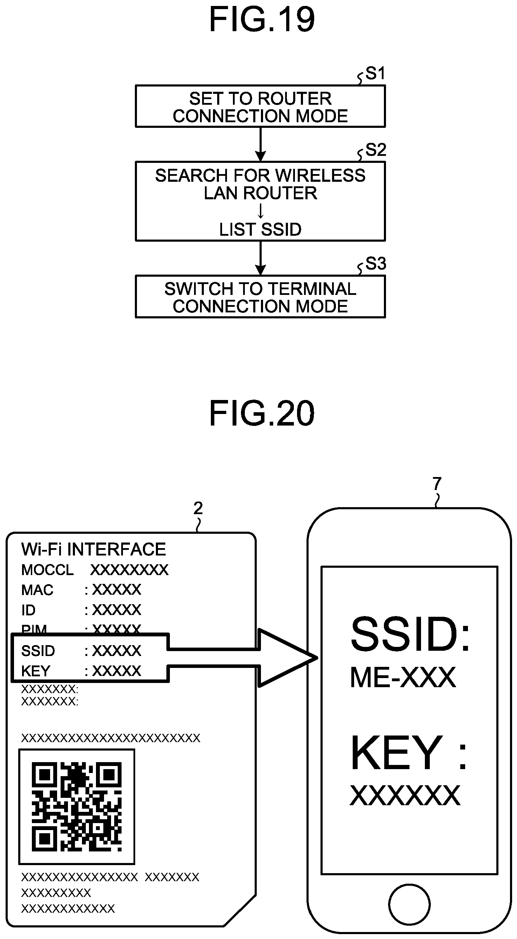

Next, FIGS. 19 to 23 will be used to describe the operation performed in the aforementioned first case in which the external connector 2 and the operation terminal 7 are temporarily connected to each other in order for the operation terminal 7 to rewrite the configuration information of the wireless communication unit 2-4 of the external connector 2.

FIG. 19 is a flowchart of the operation in which the operation terminal rewrites the configuration information of the wireless communication unit of the external connector. In the example of FIG. 19, the external connector 2 is set to the router connection mode at first before switched to the terminal connection mode (S1).

When the mode selector switch is released after the lapse of five seconds or longer and shorter than ten seconds from the point at which the mode selector switch is pressed in order to establish the communication path e in the router connection mode, the wireless communication unit 2-4 of the external connector 2 searches for one or a plurality of the routers 3 located around the external connector 2 as illustrated in FIG. 19. The wireless communication unit 2-4 of the external connector 2 lists network information, namely SSID(s), of one or a plurality of the routers 3 extracted as a result of the searching (S2) .

After the SSIDs are listed, the mode of the external connector 2 is switched to the terminal connection mode (S3). Note that the wireless communication unit 2-4 of the external connector 2 can periodically search for the information on the routers 3 around and store the information on the routers 3 that has been searched into an internal memory of the external connector 2. The external connector 2 is then selected as a wireless access point by the operation terminal 7.

FIG. 20 is a diagram describing an example of a method of selecting the external connector. As illustrated in FIG. 20, the SSID and KEY which are the connection information of the external connector 2 are indicated on the body of the external connector 2. Note that the connection information of the external connector 2 can be indicated on an instruction manual or a package box of the external connector 2.

In selecting the external connector 2, the operation terminal 7 inputs the SSID and KEY illustrated in FIG. 20 so as to be wirelessly connected to the wireless communication unit 2-4 of the external connector 2. At this time, the operation terminal 7 can check whether the external connector 2 is wirelessly connected to the operation terminal 7. Note that the lighting pattern of the LED 26 of the external connector 2 illustrated in FIG. 17 after the wireless connection is established can be changed from the lighting pattern before the wireless connection to show whether or not the wireless connection is successfully established by watching on the external connector 2.

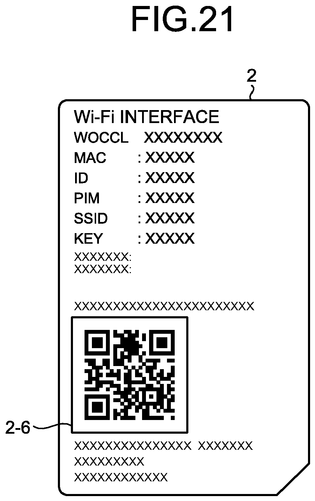

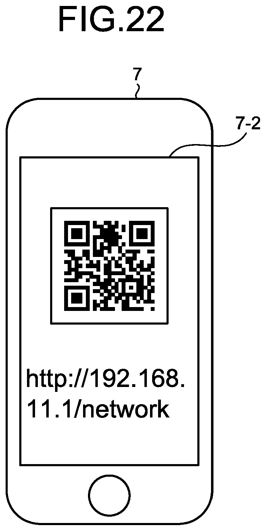

FIG. 21 is a diagram illustrating an example of a two-dimensional code assigned to the external connector. In order to simplify input of the address of the web display unit 2-5, a two-dimensional code 2-6 is assigned to the external connector 2 as illustrated in FIG. 21 so that the input of the access point to the external connector 2 can be omitted by using a camera (not illustrated) provided to the operation terminal 7 and reading the two-dimensional code 2-6. The two-dimensional code 2-6 is an example of an access point notation. FIG. 22 is a diagram illustrating a state in which the address of the web display unit is input to a display screen of the operation terminal. In order to connect the operation terminal 7 to the web display unit 2-5 illustrated in FIG. 2, the address "http://192.168.11.1/network" of the web display unit 2-5 can be directly input to a display screen 7-2 of the operation terminal 7 illustrated in FIG. 22.

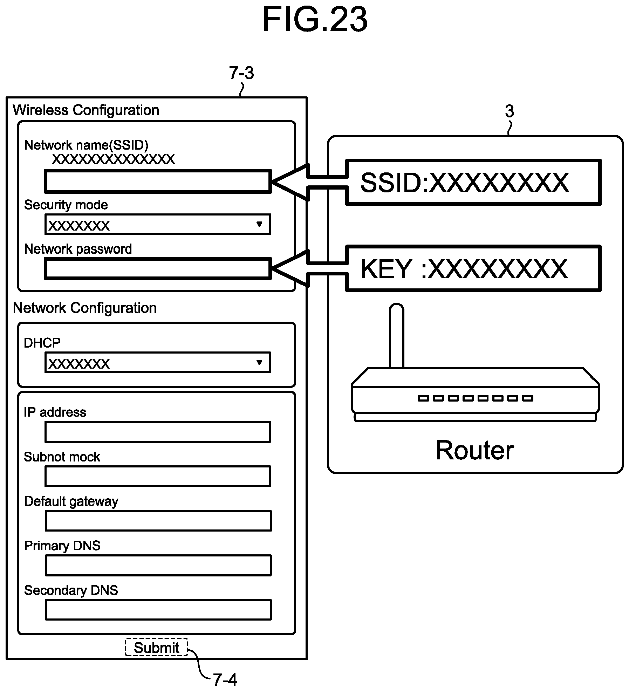

FIG. 23 is a diagram illustrating an example of a network configuration screen as a first screen displayed on the operation terminal. FIG. 23 illustrates a case of changing the configuration so as to connect the external connector 2 to the router 3 by setting the SSID and KEY of the router 3 in a state where the external connector 2 is connected to the operation terminal 7.

Once the operation terminal 7 is connected to the web display unit 2-5, a network configuration screen 7-3 as illustrated in FIG. 23 is displayed on the operation terminal 7. The operation terminal 7 is configured to be able to input the SSID and KEY to which the wireless communication unit 2-4 is to be connected and able to configure the IP address and DNS as needed on the network configuration screen 7-3. When a submit button 7-4 of the operation terminal 7 is pressed, the configuration information being input is stored in the wireless communication unit 2-4 of the external connector 2.

Note that the SSID of the router 3 indicated thereon can be directly input to the web display unit 2-5 by using a soft key of the operation terminal 7. Alternatively, as described above, the list of SSIDs of the routers 3 extracted at the time of switching the mode from the router connection mode to the terminal connection mode can be displayed on the web display unit 2-5 to save laborious inputting of the SSID by allowing selection of the router 3 to be subjected to the connection setting from the list. Still alternatively, a comment "do you wish to connect to the connector?" can be displayed on the web display unit 2-5 so that the connection setting can be performed automatically after a user's consent is established.

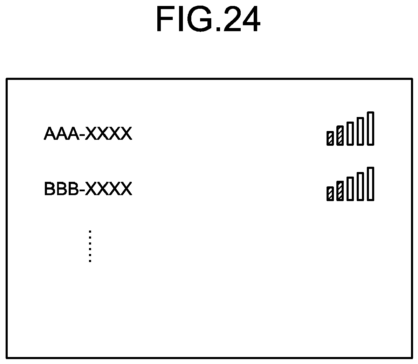

FIG. 24 is a diagram illustrating an example of the list of SSIDs displayed on the web display unit. As illustrated in FIG. 24, the web display unit 2-5 displays the list of SSIDs of the plurality of routers 3. FIG. 24 displays the list of SSIDs of two of the routers 3 as an example. The SSIDs in the list of SSIDs are preferably displayed on the web display unit 2-5 in a strong order of radio field intensity between the external connector 2 and the router 3. Here, depending on the radio wave environment, the radio field intensity between the external connector 2 and the router 3 is weakened during the extraction determination to cause the router 3, which is found once during the searching for the routers 3, to not be found in some cases, or a plurality of the routers 3 is extracted in other cases. Therefore, if the searching for the routers 3 is not completed in the router connection mode, the web display unit 2-5 of the external connector 2 can display the list of SSIDs extracted during a predetermined period of time and can solve the problem that the mode is not switched to the terminal connection mode or that too much time is required before switching. Alternatively, even if no router 3 can be searched in the router connection mode, the external connector 2 can be switched to the terminal connection mode and perform manual input.

The external connector 2 can be disconnected from the operation terminal 7 and connected to the router 3 by switching the mode from the terminal connection mode to the router connection mode after the configuration information of the wireless communication unit 2-4 is switched. In this case as well, the external connector 2 can change the lighting pattern of the LED 26 in conjunction with the switching of the connection mode in order for the user and can confirm that the connection mode of the external connector 2 has been switched by watching the LED 26 of the external connector 2.

The router 3 is generally connected to an Internet line so that the external connector 2 can be connected to the server 5 via the Internet by connecting to the router 3 through the communication path N1 as illustrated in FIG. 15. When the external connector 2 notifies the server 5 of the information of the controlled device 1 through the communication path N1, and the server 5 outputs a reception response to the notification through the communication path N2, the external connector 2 having received the reception response through the communication path N2 determines that the connection to the server 5 is successful, and thereafter switches the lighting pattern of the LED of the external connector 2 to the pattern indicating the state that the connector is in communication with the server. The user can thus determine how the communication state is switched by just looking at the external connector 2.

Here, when the SSID or KEY of the router 3 is erroneously input at the time the external connector 2 switches the mode from the terminal connection mode to the router connection mode, the only way to see whether or not the input is correct is to switch the mode to the router connection mode and to check the connection. Moreover, the connection mode of the external connector 2 is switched so that the operation terminal 7 cannot be directly connected to the external connector 2.

Accordingly, the external connector 2 switches the lighting pattern of the LED 26 in order for the user to be able to determine that the mode is switched to the router connection mode. That is, when the external connector 2 is unable to connect to the router 3 due to the setting by the operation terminal 7 in the terminal connection mode, the connector 2 switches the mode to the router connection mode and changes the lighting pattern of the LED 26 to the lighting pattern indicating the router connection mode. The external connector 2 can thus be indicated of not being connected to the router 3 while in the router connection mode.

Upon acknowledging the inability to connect to the router 3, the external connector 2 can return to the terminal connection mode again and at the same time can change the lighting pattern of the LED 26 to the pattern indicating the terminal connection mode, thereby prompting the user to set up the input configuration again.

Moreover, in order to inform the user of an invalid input, the operation terminal 7 can change a font color for an invalid parameter and display a note. Specifically, when the value of KEY is invalid, the operation terminal 7 changes the font color for KEY to a color different from the font color used when the value of KEY is normal.

Next, there will be described in detail the operation performed in the aforementioned second case in which the device 1 is operated by connecting the external connector 2 and the operation terminal 7 without the router 3 and changing the configuration of the external connector 2 directly by the operation terminal 7.

In the case where the external connector 2 is connected to the operation terminal 7 via the server 5, the external connector 2 is in a master state to spontaneously initiate the communication. In the aforementioned second case, on the other hand, the external connector 2 is in a slave state to wait for an operation request from the operation terminal 7 and to return a response to the operation request upon receiving the operation request.

In the slave state, a specific communication port of hypertext transfer protocol daemon (HTTPd) or UDP is released so that the operation terminal 7 is connected to the communication port and can be directly connected to the external connector 2 at any timing and communicate with the external connector 2. HTTPd is a function on a web server that performs a preset operation such as accepting an external connection and transmitting configuration information that is requested, or receiving and saving configuration information that is transmitted.

The web display unit 2-5 illustrated in FIG. 2 includes a first screen for configuring network information of the connector 2, a second screen for displaying the state of the device 1, and a third screen for changing the setting of the device 1. Information displayed on these screens of the web display unit 2-5 is transmitted and received to and from the device 1 via the external communication processing unit 2-2. The operation terminal 7 is configured to display the state of the device 1 in the terminal connection mode or to be able to change the setting of the device 1 in the terminal connection mode. This means that the user of the operation terminal 7 connected to the external connector 2 can check the state of the device 1 and change the setting information of the device 1.

Note that these screens can be shared with the operation screen 7-1 illustrated in FIG. 3, which is the screen displayed on the operation terminal 7 by accessing the server 5 and downloading the application.

When the operation terminal 7 is connected to the web display unit 2-5, the IP address set to connect to the web display unit 2-5 can include a port number added to the address "http://192.168.1.1:100" or a domain name added to the address "http://192.168.1.1/setting". Moreover, when the operation terminal 7 is connected to the web display unit 2-5, the connection to the operation screen 7-1 can be restricted by assigning a password so as to limit the user who is allowed to connect if the setting is confidential. That is, the operation terminal 7 can be configured to request inputting of a password at the time of connection to the first screen, the second screen, and the third screen of the connector 2.

Note that the operation terminal 7 can be configured to allow the user to monitor the state of the device 1 not only by the setting operation on the device 1 via the external connector 2 but also by displaying the information of the device 1 on the operation terminal 7. The router 3 is not required when the operation terminal 7 and the external connector 2 are connected through the communication path e illustrated in FIG. 15, in which case the operation terminal 7 can solely check the state of the device 1. The operation terminal 7 can thus be used as a service tool even when the router 3 is out of order or is in a standby power mode. This can reduce the energy consumption of the device control system 100 as a whole and can operate the device 1 in the environment before the router 3 is installed to check the operation of the device 1.

When the operation terminal 7 directly changes the configuration of the external connector 2 in the terminal connection mode, the operation terminal 7, the external connector 2, and the device 1 are located within the range of the radio waves. That is, the operation terminal 7, the external connector 2, and the device 1 are not connected through the communication paths N1 and N2 via the network 6 as illustrated in FIG. 15, but are located in a communication range to be operated by an infrared remote control. The user is present near the device 1 in such environment so that the device control system 100 set to the terminal connection mode can easily recognize the user and need not manage the operating right as described above. Therefore, the device control system 100 set to the terminal connection mode does not require the router 3 nor the server 5, whereby the operation terminal 7 connected to the external connector 2 can carry out the operation in place of the infrared remote control.

Moreover, the operation terminal 7 can realize a device state confirmation screen and a configuration information change screen of the web display unit 2-5 by using the application set in the operation terminal 7, and thus the user of the operation terminal 7 can check the state of the device 1 and change the setting information of the device 1.

As described above, the device control system 100 according to the present embodiment controls the wireless device provided indoors from the operation terminal via the network, or controls the wireless device provided indoors from the operation terminal without the network. The device control system includes: the first connection mode in which the wireless device and the operation terminal are connected via the wireless LAN router; the second connection mode in which the wireless device and the operation terminal are connected without the wireless LAN router; and the switch that switches the mode between the first connection mode and the second connection mode. The wireless device searches for one or a plurality of the wireless LAN routers located around the wireless device after the switch is pressed for a predetermined period of time or longer with the first connection mode that is set, lists network information of the one or plurality of the wireless LAN routers that are searched, and then switches the mode from the first connection mode to the second connection mode. With this configuration, the device control system 100 can connect the external connector to the router 3 even if the operation terminal does not have a dedicated application. The device control system 100 can also operate and monitor the device 1 by using the operation terminal like the handheld operation terminal 4 in the environment in which the router 3 does not exist.

The wireless device according to the present embodiment does not switch the mode from the first connection mode to the second connection mode, or from the second connection mode to the first connection mode until a predetermined period of time elapses after the switch is pressed. With this configuration, a misoperational setting of the connection mode can be prevented even when the mode selector switch is erroneously operated.

The wireless device according to the present embodiment switches the mode from the first connection mode to the second connection mode upon the lapse of the predetermined period of time after the switch is pressed, even when the wireless LAN router is not searched. With this configuration, the wireless device can communicate with the terminal 7 in the terminal connection mode, even when no router 3 cannot be searched in the router connection mode.

The network information is indicated on any of the body of the wireless device, the instruction manual of the wireless device, and the package box of the wireless device so that the network information indicated on any of the body, the instruction manual, and the package box can be input to the operation terminal in the second connection mode. With this configuration, the user of the operation terminal 7 can know the wireless access point of the operation terminal 7 and easily check whether or not the operation terminal 7 is wirelessly connected.

The wireless device includes the diode; and the lighting pattern of the diode can be varied among when the first connection mode is set, when the second connection mode is set and when the wireless device is connected to the operation terminal. With this configuration, the user can easily know which the communication state is between the wireless device and the terminal 7 just by checking the wireless device.

The wireless device can display the list of the network information selectable by the operation terminal. With this configuration, the convenience of the user can be improved as the SSID of the router 3 is selected to connect from the list of the routers 3 without inputting the SSID to the operation terminal.

The configuration illustrated in the aforementioned embodiment merely illustrates an example of the content of the preset invention, and can thus be combined with another known technique or partially omitted and/or modified without departing from the scope of the present invention.

### Reference Signs List

1, 1-1, 1-2, 1-3 controlled device; 1a controlled device information; 2, 2a, 2b external connector; 2-1 voltage conversion unit; 2-2 external communication processing unit; 2-3 communication conversion unit; 2-4 wireless communication unit; 2-5 web display unit; 2-6 two-dimensional code; 3 wireless LAN router; 4 handheld operation terminal; 5 server; 5-1 web server; 5-2 database server; 5-3 operating right management unit; 6 network; 7, 7a, 7b operation terminal; 7-1 operation screen; 7-1a information display area; 7-1b operation button information display area; 7-1b1 start/stop operation button; 7-lb2 operating mode button; 7-1b3 operation button; 7-2 display screen; 7-3 network configuration screen; 7-4 submit button; 10 controller; 11 wind direction control unit; 12 wind speed control unit; 13 temperature control unit; 13-1 temperature detection part; 13-2 set temperature input part; 13-3 temperature difference detection part; 13-4 output temperature control part; 14 communication control unit; 20 communication section; 21 indoor-outdoor unit communication unit; 22 remote control communication unit; 23 external communication unit; 23-1 power supply part; 23-2 external communication processing part; 24 remote communication unit; 25 switch; 26 LED; 30 wind direction changing section; 40 wind speed changing section; 50 output temperature changing section; 70 control remote; 100, 100A, 100B device control system; 200 wireless device.

## Claims

1. A device control system (100) for controlling from an operation terminal (7) a wireless device (200) provided in-house via a network (6) or without the network, **characterized in that**
the wireless device (200) includes
a first connection mode, in which the wireless device (200) and the operation terminal (7) are connected via a wireless LAN router (3);
a second connection mode, in which the wireless device (200) and the operation terminal (7) are directly connected each other without via the wireless LAN router (3); and
a switch to switch the mode between the first connection mode and the second connection mode, and
the wireless device (200) is adapted to
search, for one or a plurality of the wireless LAN routers located around the wireless device (200) after the switch is pressed for a predetermined period of time or longer;
list network information of the one or plurality of the wireless LAN routers that have been searched for; and then
switch the mode from the first connection mode to the second connection mode.

2. The device control system (100) according to claim 1, wherein
the wireless device (200) is adapted not to switch the mode from the first connection mode to the second connection mode or from the second connection mode to the first connection mode until the predetermined period of time elapses after the switch is pressed.

3. The device control system (100) according to claim 1 or 2, wherein
the wireless device (200) is adapted to switch the mode from the first connection mode to the second connection mode when the predetermined period of time elapses after the switch is pressed even in a case where the wireless LAN router (3) is not searched for.

4. The device control system (100) according to any one of claims 1 to 3, wherein
network information of the wireless device (200) is indicated on any of a body of the wireless device (200), an instruction manual of the wireless device (200), and packaging of the wireless device (200), and
the network information indicated on any of the body, the instruction manual, and the packaging is input to the operation terminal (7) in the second connection mode.

5. The device control system (100) according to any one of claims 1 to 4, wherein
the wireless device (200) includes a diode, and
the diode has a lighting pattern that is different when the first connection mode is set to when the second connection mode is set.

6. The device control system (100) according to any one of claims 1 to 5, wherein
the wireless device (200)
includes a screen on which network information of the wireless device (200) is changed and also
includes an access point signage to be used by the operation terminal (7) so as to connect to the screen, and
the operation terminal (7) is adapted to connect to an access point corresponding to the access point notation and change the network information.

7. The device control system (100) according to any one of claims 1 to 6, wherein
the wireless device (200) is adapted to display the list of the network information that is selectable by the operation terminal (7).

8. The device control system (100) according to any one of claims 5 to 7, wherein, in the second connection mode, the wireless device (200) is adapted to
switch, in accordance with a setting of the operation terminal (7), the mode to the first connection mode when the wireless device (200) cannot be connected to the wireless LAN router (3) and
change the lighting pattern of the diode to one indicating the first connection mode.

9. The device control system (100) according to any one of claims 1 to 8, wherein
the wireless device (200) includes
a first screen on which the network information is set;
a second screen on which a state of the wireless device (200) is displayed; and
a third screen on which a setting of the wireless device (200) is changed, and
the operation terminal (7) is adapted to
display the state of the wireless device (200) in the second connection mode or
is adapted to perform an operation to change the setting of the wireless device (200) in the second connection mode.

10. The device control system (100) according to claim 9, wherein
the operation terminal (7) is adapted to input a password when connecting to the first screen, the second screen, and the third screen of the wireless device (200).

## Patentansprüche

1. Vorrichtungssteuersystem (100) zum Steuern einer intern bereitgestellten Drahtlosvorrichtung (200) von einem Bedienungsterminal (7) aus über ein Netzwerk (6) oder ohne das Netzwerk,
**dadurch gekennzeichnet, dass**
die Drahtlosvorrichtung (200) umfasst:
einen ersten Verbindungsmodus, in dem die Drahtlosvorrichtung (200) und das Bedienungsterminal (7) über einen drahtlosen LAN-Router (3) verbunden sind;
einen zweiten Verbindungsmodus, in dem die Drahtlosvorrichtung (200) und das Bedienungsterminal (7) direkt ohne den drahtlosen LAN-Router (3) miteinander verbunden sind; und
einen Schalter zum Umschalten zwischen dem ersten Verbindungsmodus und dem zweiten Verbindungsmodus, und
wobei die Drahtlosvorrichtung (200) geeignet ist zum
Suchen nach einem oder einer Vielzahl von drahtlosen LAN-Routern, die um die Drahtlosvorrichtung (200) herum angebracht sind, nachdem der Schalter für eine vorbestimmte Zeitdauer oder länger gedrückt wurde;
Auflisten von Netzwerkinformationen des einen oder der Vielzahl von drahtlosen LAN-Routern, nach denen gesucht wurde; und danach
Umschalten des Modus von dem ersten Verbindungsmodus zu dem zweiten Verbindungsmodus.

2. Vorrichtungssteuersystem (100) nach Anspruch 1, wobei:
die Drahtlosvorrichtung (200) dazu geeignet ist, den Modus nicht von dem ersten Verbindungsmodus zu dem zweiten Verbindungsmodus oder von dem zweiten Verbindungsmodus zu dem ersten Verbindungsmodus umzuschalten, bis die vorbestimmte Zeitdauer abgelaufen ist, nachdem der Schalter gedrückt wurde.

3. Vorrichtungssteuersystem (100) nach Anspruch 1 oder 2, wobei:
die Drahtlosvorrichtung (200) geeignet ist zum Umschalten des Modus von dem ersten Verbindungsmodus zu dem zweiten Verbindungsmodus, wenn die vorbestimmte Zeitdauer abgelaufen ist, nachdem der Schalter gedrückt wurde, selbst in dem Fall, in dem nicht nach dem drahtlosen LAN-Router (3) gesucht wurde.

4. Vorrichtungssteuersystem (100) nach einem der Ansprüche 1 bis 3, wobei:
die Netzwerkinformationen der Drahtlosvorrichtung (200) auf einem beliebigen eines Körpers der Drahtlosvorrichtung (200), einem Handbuch der Drahtlosvorrichtung (200) und einer Verpackung der Drahtlosvorrichtung (200) angezeigt werden, und
die Netzwerkinformationen, die auf einem beliebigen des Körpers, dem Handbuch und der Verpackung angezeigt werden, in dem zweiten Verbindungsmodus in das Bedienungsterminal (7) eingegeben werden.

5. Vorrichtungssteuersystem (100) nach einem der Ansprüche 1 bis 4, wobei:
die Drahtlosvorrichtung (200) eine Diode aufweist, und
die Diode ein Beleuchtungsmuster aufweist, das unterschiedlich ist, wenn der erste Verbindungsmodus eingestellt ist oder wenn der zweite Verbindungsmodus eingestellt ist.

6. Vorrichtungssteuersystem (100) nach einem der Ansprüche 1 bis 5, wobei:
die Drahtlosvorrichtung (200)
einen Bildschirm aufweist, auf dem die Netzwerkinformationen der Drahtlosvorrichtung (200) verändert werden, und auch
eine Zugangspunktkennzeichnung aufweist, die von dem Bedienungsterminal (7) verwendet wird, um sich mit dem Bildschirm zu verbinden; und
das Bedienungsterminal (7) geeignet ist, um sich mit einem Zugangspunkt zu verbinden, welcher der Zugangspunktbezeichnung entspricht, und um die Netzwerkinformationen zu verändern.

7. Vorrichtungssteuersystem (100) nach einem der Ansprüche 1 bis 6, wobei
die Drahtlosvorrichtung (200) geeignet ist, um die Liste der Netzwerkinformationen anzuzeigen, die über das Bedienungsterminal (7) auswählbar ist.

8. Vorrichtungssteuersystem (100) nach einem der Ansprüche 5 bis 7, wobei die Drahtlosvorrichtung (200) in dem zweiten Verbindungsmodus geeignet ist zum
Umschalten gemäß einer Einstellung des Bedienungsterminals (7) des Modus in den ersten Verbindungsmodus, wenn die Drahtlosvorrichtung (200) nicht mit dem drahtlosen LAN-Router (3) verbunden werden kann, und
Verändern des Beleuchtungsmusters der Diode, zu einem Muster, das den ersten Verbindungsmodus anzeigt.

9. Vorrichtungssteuersystem (100) nach einem der Ansprüche 1 bis 8, wobei
die Drahtlosvorrichtung (200) aufweist:
einen ersten Bildschirm, auf dem die Netzwerkinformationen eingestellt werden;
einen zweiten Bildschirm, auf dem ein Zustand der Drahtlosvorrichtung (200) angezeigt wird; und
einen dritten Bildschirm, auf dem eine Einstellung der Drahtlosvorrichtung (200) verändert wird, und
wobei das Bedienungsterminal (7) geeignet ist zum Anzeigen des Zustands der Drahtlosvorrichtung (200) in dem zweiten Verbindungsmodus; oder geeignet ist zum
Ausführen einer Operation zum Verändern der Einstellung der Drahtlosvorrichtung (200) in dem zweiten Verbindungsmodus.

10. Vorrichtungssteuersystem (100) nach Anspruch 9, wobei
das Bedienungsterminal (7) geeignet ist zum Eingeben eines Passworts, wenn es mit dem ersten Bildschirm, dem zweiten Bildschirm und dem dritten Bildschirm der Drahtlosvorrichtung (200) verbunden wird.

## Revendications

1. Système de commande de dispositif (100) destiné à commander, à partir d'un terminal d'opération (7), un dispositif sans fil (200) fourni en interne par l'intermédiaire d'un réseau (6) ou sans le réseau, **caractérisé en ce que** :
le dispositif sans fil (200) inclut :
un premier mode de connexion, dans lequel le dispositif sans fil (200) et le terminal d'opération (7) sont connectés par l'intermédiaire d'un routeur LAN sans fil (3) ;
un second mode de connexion, dans lequel le dispositif sans fil (200) et le terminal d'opération (7) sont directement connectés l'un à l'autre sans passer par le routeur LAN sans fil (3) ; et
un commutateur destiné à commuter le mode entre le premier mode de connexion et le second mode de connexion ; et
le dispositif sans fil (200) est apte à :
rechercher un routeur ou une pluralité des routeurs LAN sans fil situés autour du dispositif sans fil (200), après un appui, pendant une période de temps prédéterminée ou plus, sur le commutateur ;
répertorier des informations de réseau dudit un routeur ou de ladite pluralité des routeurs LAN sans fil qui ont été recherchés ; et ensuite
commuter le mode, du premier mode de connexion au second mode de connexion.

2. Système de commande de dispositif (100) selon la revendication 1, dans lequel :
le dispositif sans fil (200) est apte à ne pas commuter le mode, du premier mode de connexion au second mode de connexion, ou du second mode de connexion au premier mode de connexion, jusqu'à ce que la période de temps prédéterminée s'écoule après l'appui sur le commutateur.

3. Système de commande de dispositif (100) selon la revendication 1 ou 2, dans lequel :
le dispositif sans fil (200) est apte à commuter le mode du premier mode de connexion au second mode de connexion lorsque la période de temps prédéterminée s'écoule après l'appui sur le commutateur y compris dans le cas où le routeur LAN sans fil (3) n'est pas recherché.

4. Système de commande de dispositif (100) selon l'une quelconque des revendications 1 à 3, dans lequel :
des informations de réseau du dispositif sans fil (200) sont indiquées sur l'un quelconque parmi un boîtier du dispositif sans fil (200), un manuel d'instructions du dispositif sans fil (200) et un emballage du dispositif sans fil (200) ; et
les informations de réseau indiquées sur l'une quelconque parmi le boîtier, le manuel d'instructions et l'emballage sont entrées sur le terminal d'opération (7) dans le second mode de connexion.

5. Système de commande de dispositif (100) selon l'une quelconque des revendications 1 à 4, dans lequel :
le dispositif sans fil (200) inclut une diode ; et
la diode présente un motif d'éclairage qui est différent lorsque le premier mode de connexion est défini et lorsque le second mode de connexion est défini.

6. Système de commande de dispositif (100) selon l'une quelconque des revendications 1 à 5, dans lequel :
le dispositif sans fil (200) inclut :
un écran sur lequel des informations de réseau du dispositif sans fil (200) sont modifiées, et également
une signalisation de point d'accès devant être utilisée par le terminal d'opération (7) de manière à se connecter à l'écran ; et
le terminal d'opération (7) est apte à se connecter à un point d'accès correspondant à la signalisation de point d'accès et à modifier les informations de réseau.

7. Système de commande de dispositif (100) selon l'une quelconque des revendications 1 à 6, dans lequel :
le dispositif sans fil (200) est apte à afficher la liste des informations de réseau qui peut être sélectionnée par le terminal d'opération (7).

8. Système de commande de dispositif (100) selon l'une quelconque des revendications 5 à 7, dans lequel, dans le second mode de connexion, le dispositif sans fil (200) est apte à :
commuter, conformément à un réglage du terminal d'opération (7), le mode, sur le premier mode de connexion, lorsque le dispositif sans fil (200) ne peut pas être connecté au routeur LAN sans fil (3) ; et
remplacer le motif d'éclairage de la diode par un motif indiquant le premier mode de connexion.

9. Système de commande de dispositif (100) selon l'une quelconque des revendications 1 à 8, dans lequel :
le dispositif sans fil (200) inclut :
un premier écran sur lequel les informations de réseau sont définies ;
un deuxième écran sur lequel un état du dispositif sans fil (200) est affiché ; et
un troisième écran sur lequel un réglage du dispositif sans fil (200) est modifié ; et
le terminal d'opération (7) est apte à :
afficher l'état du dispositif sans fil (200) dans le second mode de connexion ; ou
mettre en œuvre une opération pour modifier le réglage du dispositif sans fil (200) dans le second mode de connexion.

10. Système de commande de dispositif (100) selon la revendication 9, dans lequel :
le terminal d'opération (7) est apte à entrer un mot de passe dans le cadre de la connexion au premier écran, au deuxième écran et au troisième écran du dispositif sans fil (200).
